# EUROPEAN PATENT APPLICATION

(11) **EP 4 571 375 A1**
(43) Date of publication of application: **18.06.2025**
(21) Application number: 23852218.9
(22) Date of filing: 30.05.2023
(51) Int. Cl.: G02B 6/02, G02B 6/26

(54) **MULTICORE FIBER, OPTICAL DEVICE, AND MULTICORE FIBER ASSEMBLY**

(30) Priority: 08.08.2022 JP 2022126586
(71) Applicant: Fujikura Ltd., Tokyo 135-8512 (JP)
(72) Inventor: ODA, Takuya, Sakura-shi, Chiba 285-8550 (JP)
(74) Representative: Plasseraud IP
(86) International application number: PCT/JP2023/020031
(87) International publication number: WO 2024/034234

(57) **Abstract**

Provided is a multi-core fiber having an end surface whose inclination direction is appropriately set in consideration of connection. In a multi-core fiber (MF), inclination directions (v1, v2) of a first end surface (σ1) and a second end surface (σ2) are set so that, in a case where the first end surface (σ1) and the second end surface (σ2) are brought into contact with each other so as to minimize an angle made by an extending direction of cores (a1 to an) in the first end surface (σ1) and an extending direction of cores (a1 to an) in the second end surface (σ2), each of the cores (a1 to an) in the first end surface (σ1) at least partially overlaps any of the cores (a1 to an) in the second end surface (σ2).

## Description

### Technical Field

The present invention relates to a multi-core fiber, an optical device including a multi-core fiber, or a multi-core fiber assembly including multi-core fibers.

### Background Art

In the field of optical communications, a multi-core fiber including a plurality of cores is widely used. A document disclosing the multi-core fiber is, for example, Patent Literature 1.

### Citation List

### [Patent Literature]

[Patent Literature 1]
Japanese Patent Application Publication, Tokukai, No. 2019-152866

### Summary of Invention

### Technical Problem

Optical fibers are often designed to have an end surface inclined such that the end surface is not orthogonal to an extending direction of cores, for the purpose of reducing reflection in the end surface. However, in a case where a multi-core fiber is designed to have an inclined end surface, the following problem can occur, for example.

That is, in an attempt to connect two multi-core fibers having inclined end surfaces to each other so that extending directions of cores in the end surfaces of these multi-core fibers coincide with each other, it is sometimes impossible to overlap cores of one multi-core fiber with cores of the other multi-core fiber. This happens because the inclination directions of the end surfaces of the multi-core fibers are not set appropriately in consideration of connection.

An aspect of the present invention was made in consideration of the above problem, and has an object to provide a multi-core fiber having an end surface whose inclination direction is appropriately set in consideration of connection, an optical device including such a multi-core fiber, or a multi-core fiber assembly including such multi-core fibers.

### Solution to Problem

A multi-core fiber in accordance with an aspect of the present invention employs a configuration of a multi-core fiber including: a cladding; a plurality of cores formed inside the cladding; and a first end surface and a second end surface each of which is inclined so as not to be orthogonal to an extending direction of the plurality of cores, inclination directions of the first end surface and the second end surface being set so that, in a case where the first end surface and the second end surface are brought into surface contact with each other so as to minimize an angle made by an extending direction of the plurality of cores in the first end surface and an extending direction of the plurality of cores in the second end surface, each of the plurality of cores in the first end surface at least partially overlaps any of the plurality of cores in the second end surface.

A multi-core fiber assembly in accordance with an aspect of the present invention employs a configuration of a multi-core fiber assembly including at least one first multi-core fiber and at least one second multi-core fiber, the at least one first multi-core fiber including a cladding, a plurality of cores formed inside the cladding, and a first end surface inclined so as not to be orthogonal to an extending direction of the plurality of cores, the at least one second multi-core fiber including a cladding, a plurality of cores formed inside the cladding, and a second end surface inclined so as not to be orthogonal to an extending direction of the plurality of cores, inclination directions of the first end surface and the second end surface being set so that, in a case where the first end surface and the second end surface are brought into surface contact with each other so as to minimize an angle made by the extending direction of the plurality of cores in the first end surface and the extending direction of the plurality of cores in the second end surface, each of the plurality of cores in the first end surface at least partially overlaps any of the plurality of cores in the second end surface.

### Advantageous Effects of Invention

According to an aspect of the present invention, it is possible to provide a multi-core fiber having an end surface whose inclination direction is appropriately set in consideration of connection, an optical device including such a multi-core fiber, or a multi-core fiber assembly including such multi-core fibers.

### Brief Description of Drawings

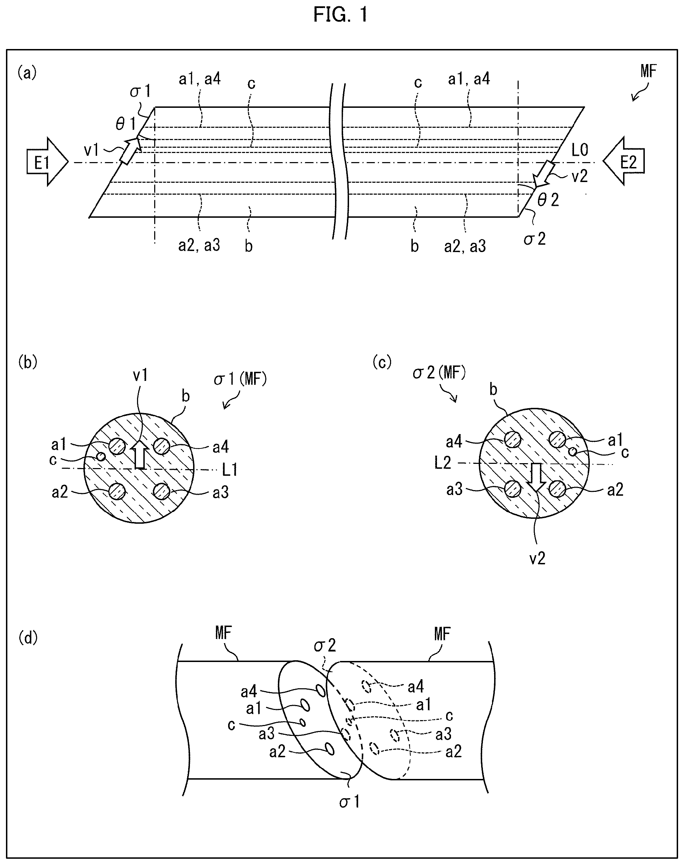

Fig. 1 is a view illustrating a configuration of a multi-core fiber in accordance with a first embodiment of the present invention. (a) is a side view of the multi-core fiber, (b) is a front view of one end surface of the multi-core fiber, (c) is a front view of the other end surface of the multi-core fiber, and (d) is a perspective view of the multi-core fiber.

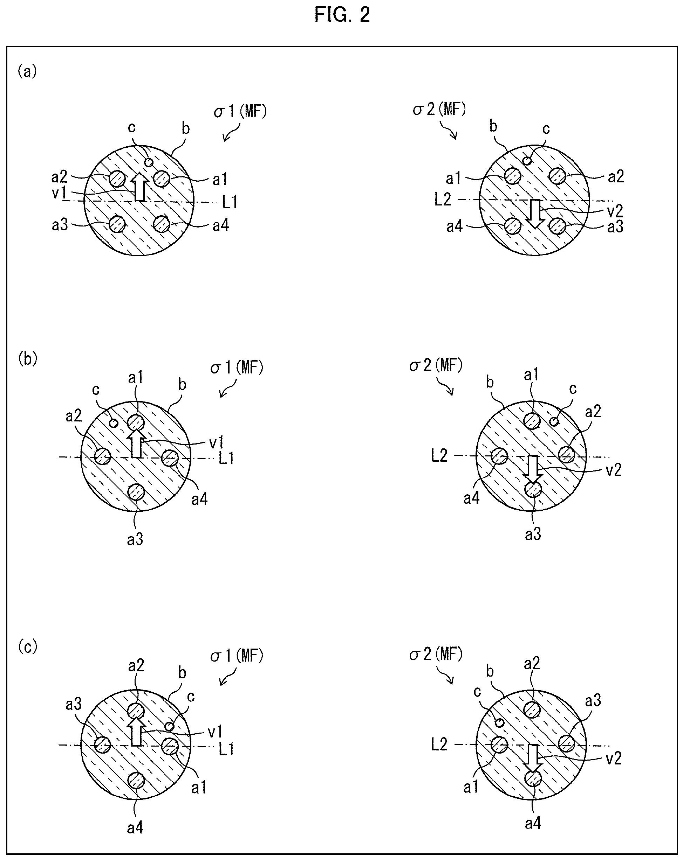

Fig. 2 is a view illustrating variations of the multi-core fiber shown in Fig. 1. (a) is a front view of two end surfaces of a multi-core fiber in accordance with a first variation, (b) is a front view of two end surfaces of a multi-core fiber in accordance with a second variation, and (c) is a front view of two end surfaces of a multi-core fiber in accordance with a third variation.

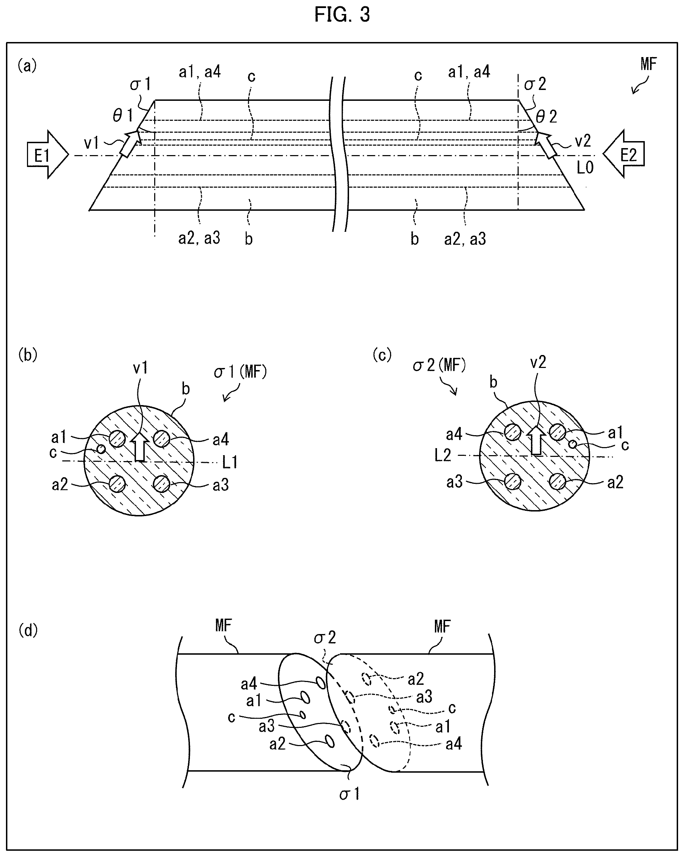

Fig. 3 is a view illustrating a configuration of a multi-core fiber in accordance with a second embodiment of the present invention. (a) is a side view of the multi-core fiber, (b) is a front view of one end surface of the multi-core fiber, (c) is a front view of the other end surface of the multi-core fiber, and (d) is a perspective view of the multi-core fiber.

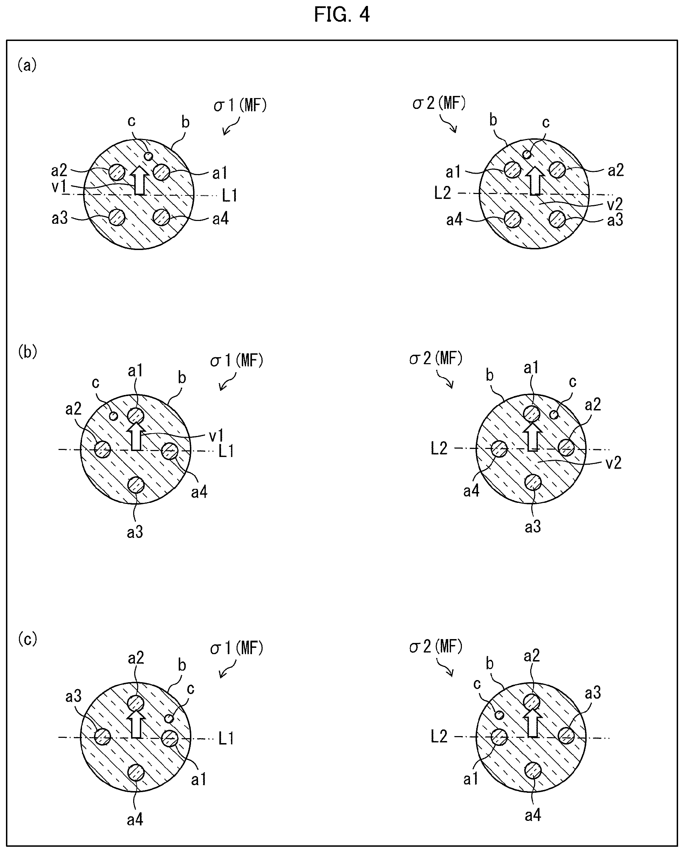

Fig. 4 is a view illustrating variations of the multi-core fiber shown in Fig. 3. (a) is a front view of two end surfaces of a multi-core fiber in accordance with a first variation, (b) is a front view of two end surfaces of a multi-core fiber in accordance with a second variation, and (c) is a front view of two end surfaces of a multi-core fiber in accordance with a third variation.

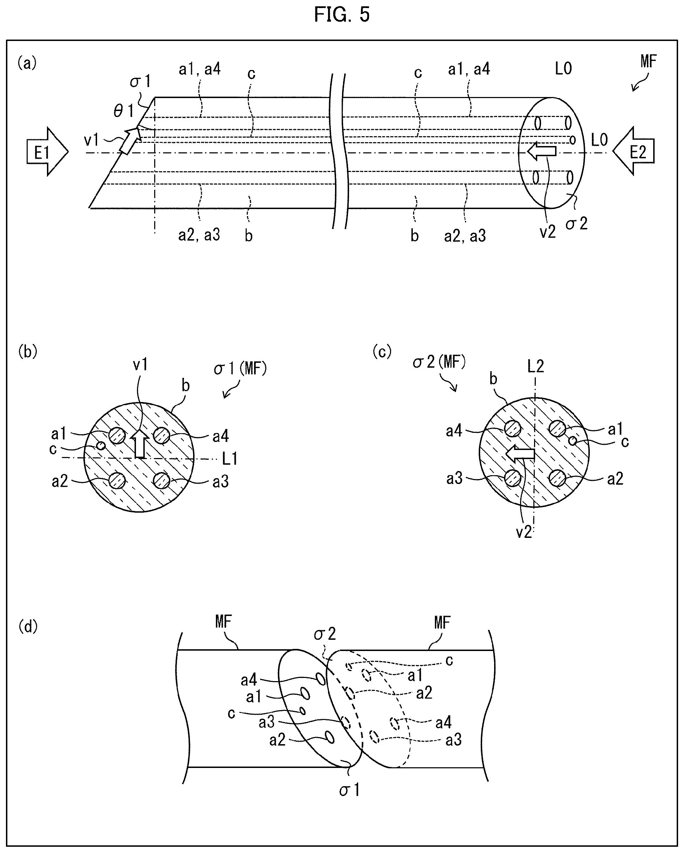

Fig. 5 is a view illustrating a configuration of a multi-core fiber in accordance with a third embodiment of the present invention. (a) is a side view of the multi-core fiber, (b) is a front view of one end surface of the multi-core fiber, (c) is a front view of the other end surface of the multi-core fiber, and (d) is a perspective view of the multi-core fiber.

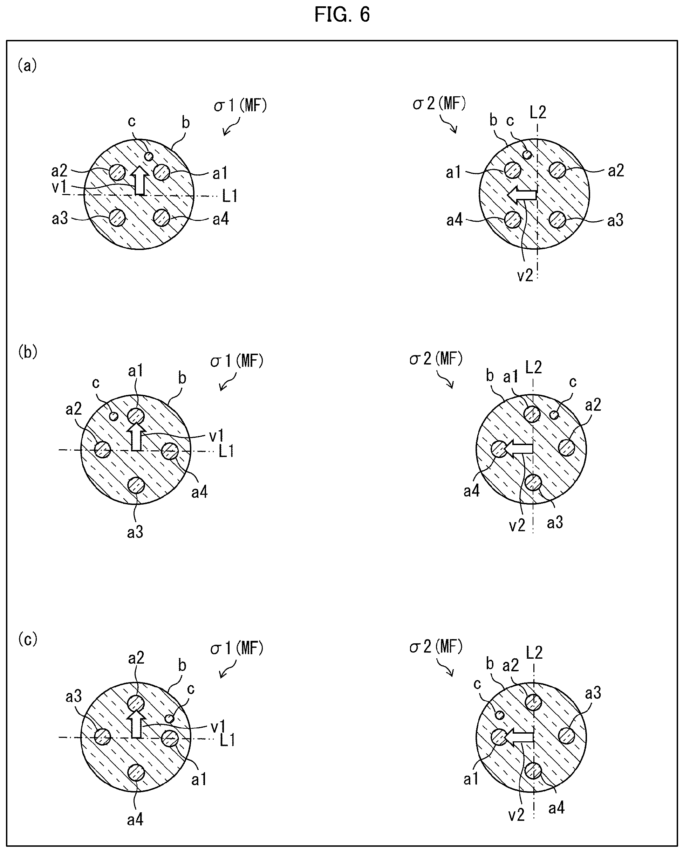

Fig. 6 is a view illustrating variations of the multi-core fiber shown in Fig. 5. (a) is a front view of two end surfaces of a multi-core fiber in accordance with a first variation, (b) is a front view of two end surfaces of a multi-core fiber in accordance with a second variation, and (c) is a front view of two end surfaces of a multi-core fiber in accordance with a third variation.

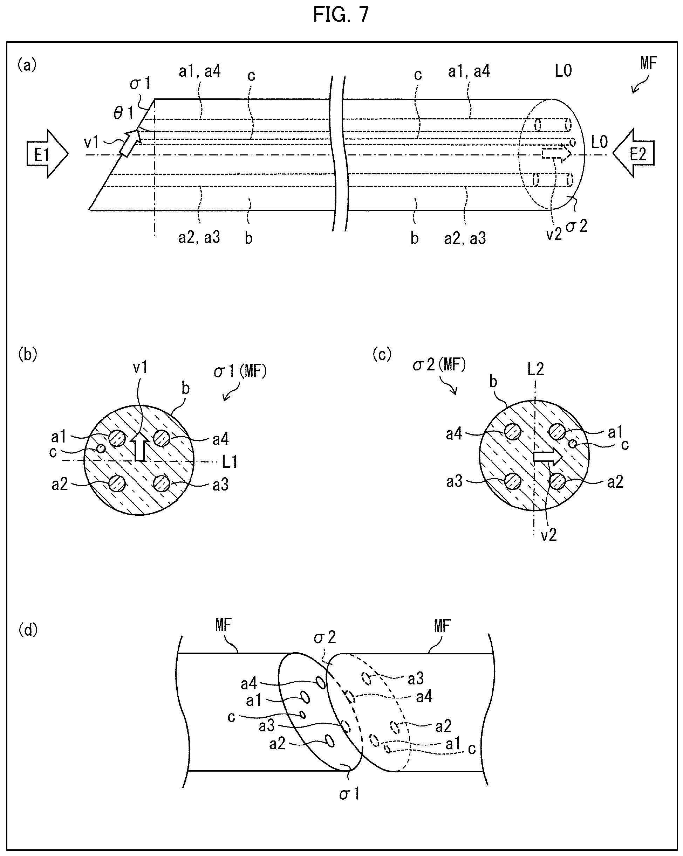

Fig. 7 is a view illustrating a configuration of a multi-core fiber in accordance with a fourth embodiment of the present invention. (a) is a side view of the multi-core fiber, (b) is a front view of one end surface of the multi-core fiber, (c) is a front view of the other end surface of the multi-core fiber, and (d) is a perspective view of the multi-core fiber.

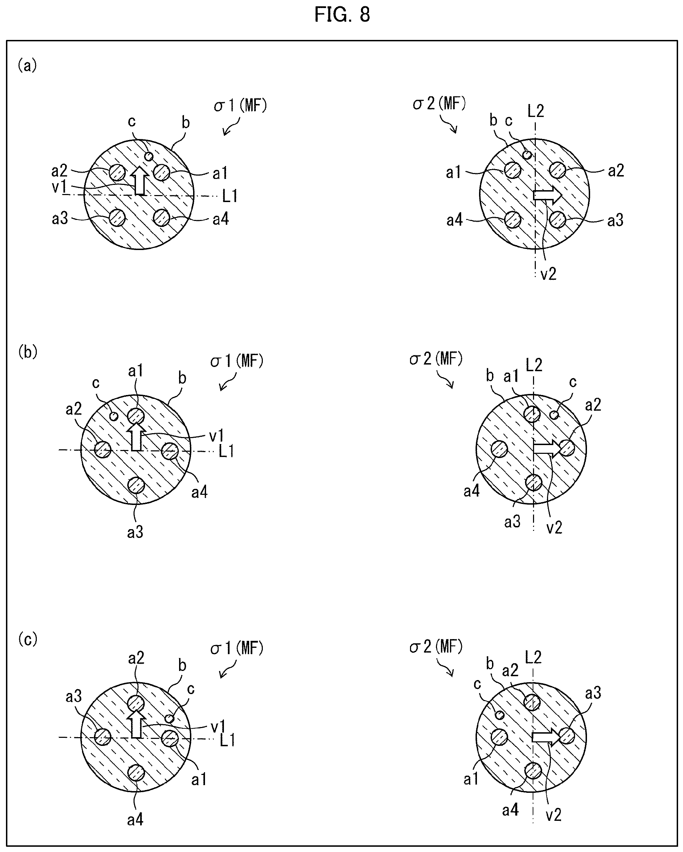

Fig. 8 is a view illustrating variations of the multi-core fiber shown in Fig. 7. (a) is a front view of two end surfaces of a multi-core fiber in accordance with a first variation, (b) is a front view of two end surfaces of a multi-core fiber in accordance with a second variation, and (c) is a front view of two end surfaces of a multi-core fiber in accordance with a third variation.

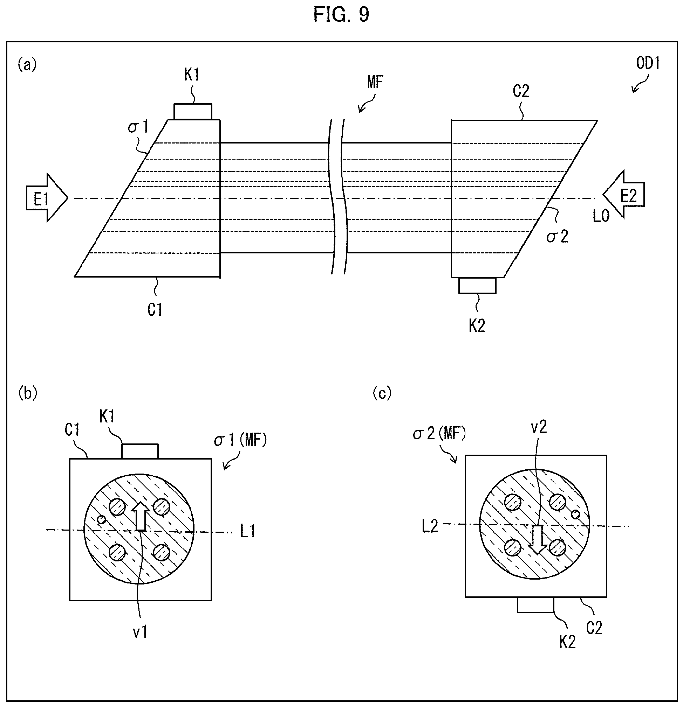

Fig. 9 is a view illustrating a configuration of an optical device in accordance with a fifth embodiment of the present invention. (a) is a side view of the optical device, (b) is a front view of one end surface of the optical device, and (c) is a front view of the other end surface of the optical device.

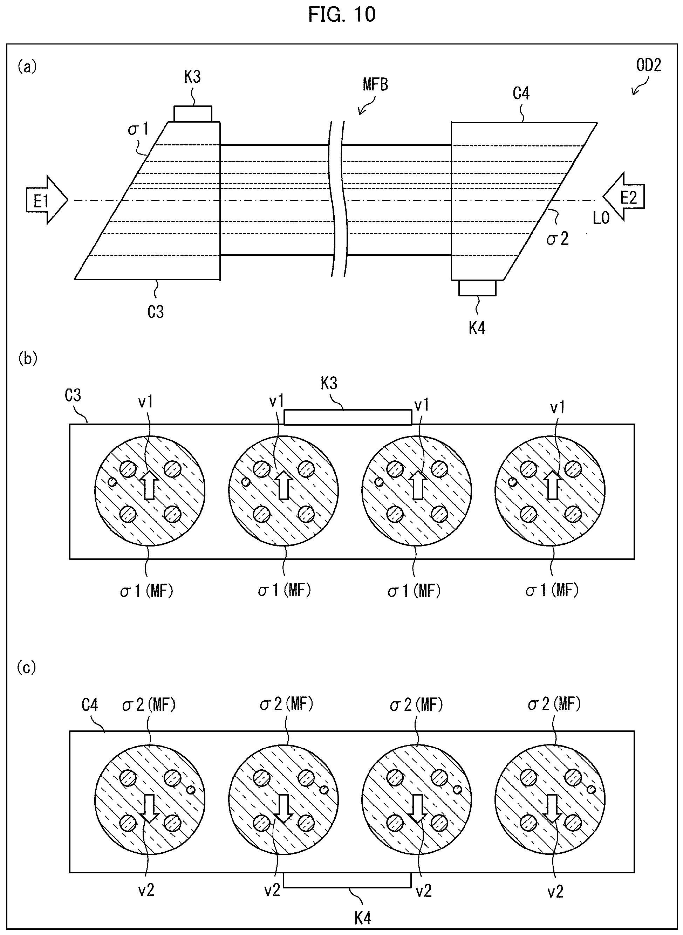

Fig. 10 is a view illustrating a configuration of an optical device in accordance with a sixth embodiment of the present invention. (a) is a side view of the optical device, (b) is a front view of one end surface of the optical device, and (c) is a front view of the other end surface of the optical device.

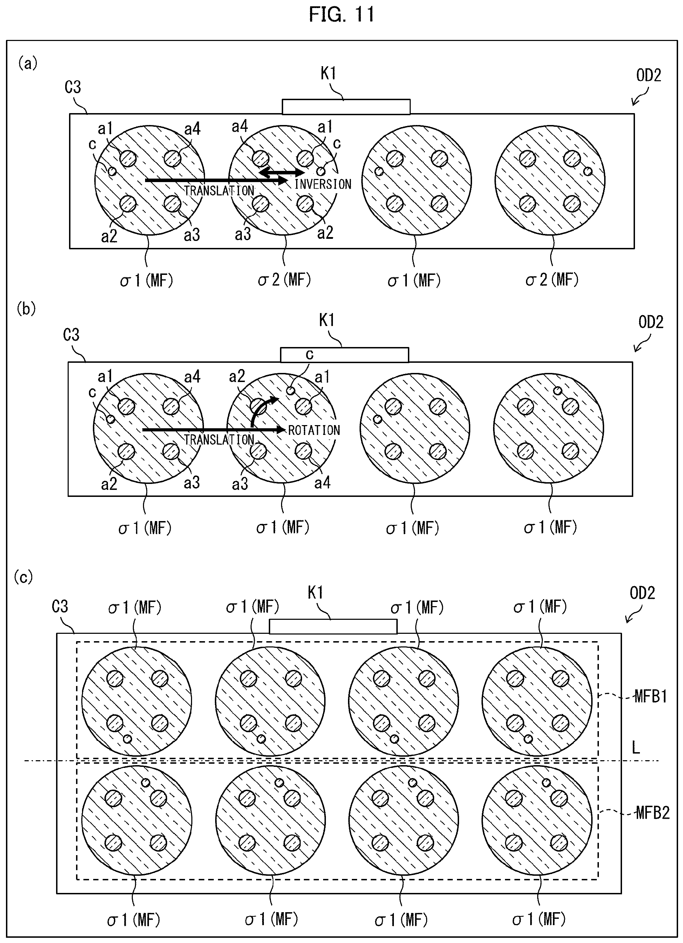

Fig. 11 is a view illustrating variations of the optical device shown in Fig. 10. (a) is a front view of one end surface of an optical device in accordance with a first variation, (b) is a front view of one end surface of an optical device in accordance with a second variation, and (c) is a front view of one end surface of a multi-core fiber in accordance with a third variation.

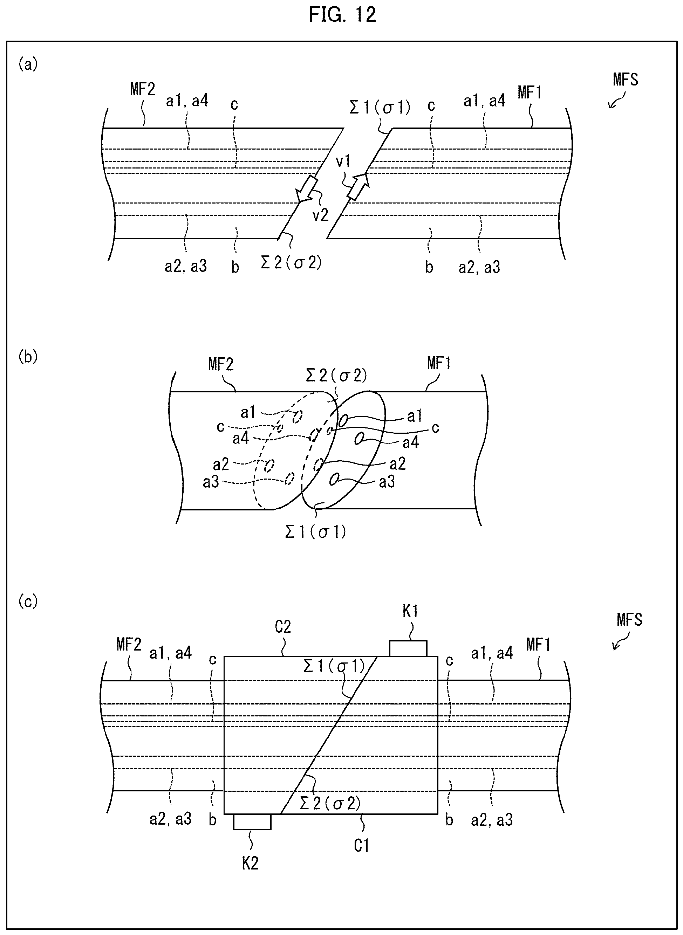

Fig. 12 is a view illustrating a configuration of a multi-core fiber assembly MFS in accordance with a seventh embodiment of the present invention. (a) is a side view of the multi-core fiber assembly, and (b) is a perspective view of the multi-core fiber assembly.

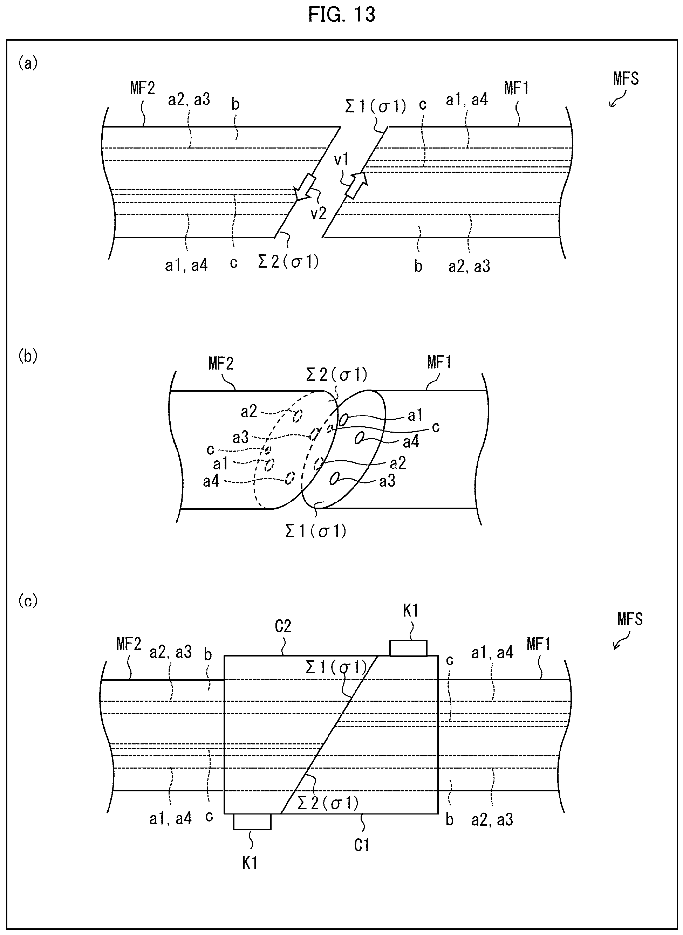

Fig. 13 is a view illustrating a configuration of a multi-core fiber assembly MFS in accordance with an eighth embodiment of the present invention. (a) is a side view of the multi-core fiber assembly, and (b) is a perspective view of the multi-core fiber assembly.

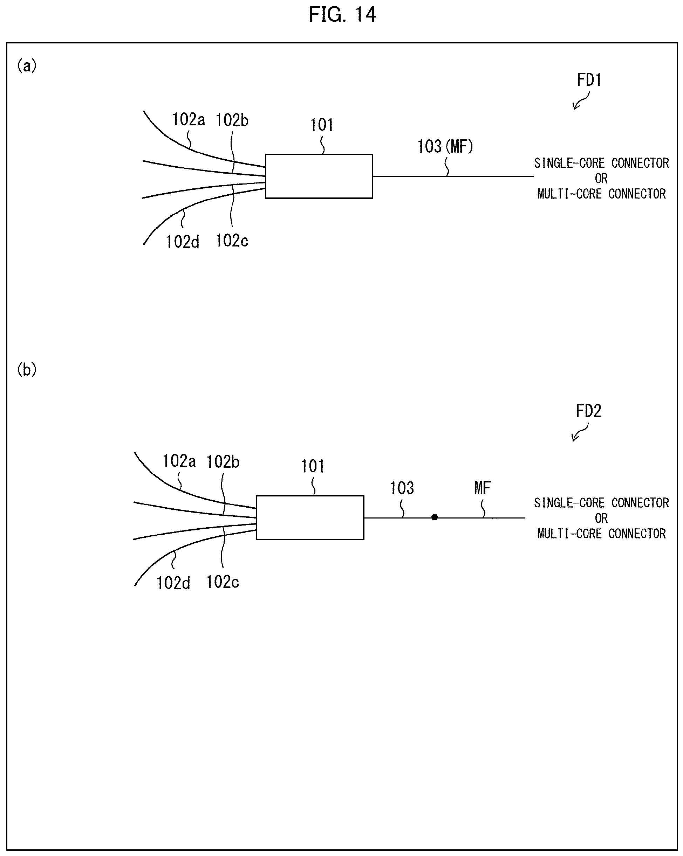

In Fig. 14, (a) is a block diagram illustrating a configuration of a FI/FO device including a multi-core fiber in accordance with an embodiment of the present invention, and (b) is a block diagram illustrating a configuration of a FI/FO device to which a multi-core fiber in accordance with an embodiment of the present invention is connected.

### Description of Embodiments

### [First Embodiment]

### (Configuration of Multi-Core Fiber)

The following will describe, with reference to Fig. 1, a configuration of a multi-core fiber MF in accordance with a first embodiment of the present invention. In Fig. 1, (a) is a side view of the multi-core fiber MF. (b) is a front view of one end surface (hereinafter, referred to as a "first end surface") σ1 of the multi-core fiber MF viewed in a direction of a sight line E1. (c) is a front view of the other end surface (hereinafter, referred to as a "second end surface") σ2 of the multi-core fiber MF viewed in a direction of a sight line E2. (d) is a perspective view of the multi-core fiber MF which is in a state where a first end surface σ1 and a second end surface σ2 abut on each other.

The multi-core fiber MF includes n cores a1 to an and a cladding b. Here, n is any natural number of not less than 2 (illustrated in Fig. 1 is a case where n = 4). The cladding b is a cylindrical member. The cladding b is made of silica glass, for example. Each core ai (i is a natural number of not less than 1 and not more than n) is a cylindrical area which is provided inside the cladding b, which has a refractive index higher than that of the cladding b, and which extends in a direction in which the cladding b extends. Each core ai is made of silica glass doped with an updopant such as germanium, for example. Note that the cladding b may have any shape, provided that the shape is a columnar shape. Further, the cladding b may have any cross-sectional shape. The cross-sectional shape of the cladding b may be a polygonal shape, such as a quadrangular shape or a hexagonal shape. Note that the multi-core fiber MF may further include an additional core(s) which is/are not the n cores a1 to an of interest in the present embodiment. For example, the multi-core fiber MF may include, as an additional core(s) which is/are not the n cores a1 to an of interest, a core provided in a center of the cladding b. The n cores a1 to an of interest are cores used for communication, for example. In this case, the n cores a1 to an of interest are preferably cores satisfying the standard defined by ITU-T. The additional core(s) which is/are not the n cores a1 to an of interest may be a core(s) used for communication or a core(s) (dummy core(s)) not used for communication. In the latter case, the additional core(s) which is/are not the n cores a1 to an of interest may be cores not satisfying the standard defined by ITU-T.

The multi-core fiber MF further includes a marker c for identifying core numbers 1 to n of the cores a1 to an. The marker c is a columnar area which is provided inside the cladding b, which has a different refractive index from that of the cladding b, and which extends in a direction in which the cladding b extends. The marker c may have any cross-sectional shape. The cross-sectional shape of the marker c may be a circular shape, a triangular shape, or a quadrangular shape, for example. The marker c is made of silica glass doped with a downdopant such as fluorine or boron, for example. In this case, the refractive index of the marker c is lower than that of the cladding b. Alternatively, the marker c is made of silica glass doped with an updopant such as germanium, aluminum, phosphor, or chlorine. In this case, the refractive index of the marker c is higher than that of the cladding b. The marker c may be formed by, for example, a drilling process or a stack-and-draw process. Generally, the marker c has an outer diameter smaller than an outer diameter of the core ai. Note that the marker c may be a hole. In this case, the refractive index of the marker c is lower than that of the cladding b. Further, the multi-core fiber MF may further include a marker which is not the marker c of interest in the present embodiment.

The core numbers 1 to n of the cores a1 to an can be identified on the basis of distances from the marker c. For example, in a case where the cores a1 to an are arranged on a circumference of a circle, the core numbers 1 to n of the cores a1 to an can be identified in the following manner. First, the core a1, which is closest to the marker c, is given a core number "1". Next, the core a2, which is second closest to the marker c, is given a core number "2". Then, when the circumference of the circle is traced so as to pass the core a1 and the core a2 in this order, the core a3 which is a third core to be traced is given a core number "3", the core a4 which is a fourth core to be traced is given a core number "4", ... the core an which is an n-th core to be traced is given a core number "n".

The present embodiment employs a configuration in which the core numbers 1 to n are identified by referring to the marker c. A structure to be referred to for identifying the core numbers 1 to n is not limited to the marker c. For example, it is possible to employ a configuration in which the core numbers 1 to n are identified by referring to a mark (e.g., a symbol and/or a character) formed on a surface of the cladding b. In a case where the multi-core fiber MF is covered with a cover, the core numbers 1 to n may be identified by referring to a mark formed on a surface of the cover. In a case where a connector is attached to an end of the multi-core fiber MF, it is possible to employ a configuration in which the core numbers 1 to n are identified by referring to a key (e.g., a projection) formed in the connector. In a case where a flat portion is provided to a side surface of the cladding b in such a manner that a cross section of the cladding b has an anisotropic shape (e.g., D-shape), for example, the core numbers 1 to n may be identified by referring to the flat portion. In a case where a cutout is provided to a side surface of the cladding b, the core numbers 1 to n may be identified by referring to the cutout.

In the multi-core fiber MF, the first end surface σ1 is inclined so as not to be orthogonal to an extending direction of the cores a1 to an. Hereinafter, assuming that a flat plane orthogonal to the extending direction of the cores a1 to an is a horizontal plane, a direction in which a falling gradient of the first end surface σ1 becomes maximum will be referred to as an inclination direction v1 of the first end surface σ1 and a maximum value of the falling gradient of the first end surface σ1 will be referred to as an inclination angle θ1 of the first end surface σ1. The inclination angle θ1 of the first end surface σ1 is preferably not less than 2° and not more than 88°, more preferably not less than 4° and not more than 12°, even more preferably not less than 7° and not more than 9°, still more preferably not less than 7.8° and not more than 8.2°. The inclination angle θ1 of the first end surface σ1 is 8° or 6°, for example. Note that a gradient in a non-inclination direction is preferably not less than 0° and not more than 2°, more preferably not less than 0° and not more than 1°.

Further, in the multi-core fiber MF, the second end surface σ2 is inclined so as not to be orthogonal to the extending direction of the cores a1 to an. Hereinafter, assuming that the flat plane orthogonal to the extending direction of the cores a1 to an is a horizontal plane, a direction in which a falling gradient of the second end surface σ2 becomes maximum will be referred to as an inclination direction v2 of the second end surface σ2 and a maximum value of the falling gradient of the second end surface σ2 will be referred to as an inclination angle θ2 of the second end surface σ2. The inclination angle θ2 of the second end surface σ2 is preferably not less than 2° and not more than 88°, more preferably not less than 4° and not more than 12°, even more preferably not less than 7° and not more than 9°, still more preferably not less than 7.8° and not more than 8.2°. The inclination angle θ2 of the second end surface σ2 is 8° or 6°, for example. Note that the gradient in a non-inclination direction is preferably not less than 0° and not more than 2°, more preferably not less than 0° and not more than 1°.

Further, the inclination direction v1 of the first end surface σ1 and the inclination direction v2 of the second end surface σ2 are defined so as to satisfy the following condition 1.

Condition 1: In a case where the first end surface σ1 and the second end surface σ2 are brought into surface contact with each other so as to minimize an angle made by the extending direction of the cores a1 to an in the first end surface σ1 and the extending direction of the cores a1 to an in the second end surface σ2, each of the cores a1 to an in the first end surface σ1 at least partially overlaps any of the cores a1 to an in the second end surface σ2.

Note that the aspect in which two cores at least partially overlap each other encompasses an aspect in which only a part of one core overlaps only a part of the other core, an aspect in which only a part of one core overlaps the whole of the other core, and an aspect in which the whole of one core overlaps the whole of the other core (i.e., an aspect in which the two cores overlap each other without excess or deficiency).

This makes it possible to carry out self-alignment in connection of two multi-core fibers MF. That is, in a case where the first end surface σ1 of one multi-core fiber MF and the second end surface σ2 of the other multi-core fiber MF are connected to each other such that the two multi-core fibers MF are aligned in a single straight line as much as possible, the cores a1 to an of these two multi-core fibers MF can be optically coupled to each other. Here, the expression that the first end surface σ1 and the second end surface σ2 are connected to each other "such that the two multi-core fibers MF are aligned in a single straight line as much as possible" means that the first end surface σ1 and the second end surface σ2 are connected to each other "so as to minimize an angle made by an extending direction of the cores a1 to an in the first end surface σ1 of one multi-core fiber MF and an extending direction of the cores a1 to an in the second end surface σ2 of the other multi-core fiber".

From this viewpoint, each of the inclination angle θ1 of the first end surface σ1 and the inclination angle θ2 of the second end surface σ2 is preferably not less than 45°, more preferably not less than 60°, even more preferably not less than 70°. The reason for this is as follows. Setting the inclination angles θ1 and θ2 so as to be larger can provide extreme turning made at a connection point between the two multi-core fibers MF when the cores a1 to an of the two multi-core fibers MF are not optically coupled to each other. This makes it easy to carry out self-alignment in connection of the two multi-core fibers MF. Furthermore, setting the inclination angles θ1 and θ2 can increase surface areas of the end surfaces σ1 and σ2. This makes it possible to make the surface contact between the end surfaces σ1 and σ2 more stable, thereby making it possible to provide firmer connection between the end surfaces σ1 and σ2.

Note that the inclination angle θ1 of the first end surface σ1 and the inclination angle θ2 of the second end surface σ2 may or may not be equal to each other. The inclination angle θ1 of the first end surface σ1 and the inclination angle θ2 of the second end surface σ2 are preferably equivalent to each other (substantially equal to each other), more preferably equal to each other (completely equal to each other). Here, the expression that the inclination angle θ1 of the first end surface σ1 and the inclination angle θ2 of the second end surface σ2 are equivalent to each other (substantially equal to each other) means, for example, that a difference |θ1-θ2| is not more than 2° or not more than 0.4°.

Further, n×(n-1)/2 straight lines passing through centers of two cores ai and aj selected from the cores a1 to an in the first end surface σ1 and the second end surface σ2 will be considered. Each of the gradients of the first end surface σ and the second end surface σ2 with respect to a direction which is in parallel with these straight lines is preferably not more than 5°, more preferably not more than 2°.

In a case where the inclination angle θ1 of the first end surface σ1 and the inclination angle θ2 of the second end surface σ2 are equal to each other, a minimum value of an angle made by the extending direction of the cores a1 to an in the first end surface σ1 and the extending direction of the cores a1 to an in the second end surface σ2 is 0°. That is, minimizing the angle made by the extending direction of the cores a1 to an in the first end surface σ1 and the extending direction of the cores a1 to an in the second end surface σ2 is equivalent to making the extending direction of the cores a1 to an in the first end surface σ1 and the extending direction of the cores a1 to an in the second end surface σ2 coincide with each other. Therefore, the above condition 1 is equivalent to the following condition 1'.

Condition 1': In a case where the first end surface σ1 and the second end surface σ2 are brought into surface contact with each other so as to make the extending direction of the cores a1 to an in the first end surface σ1 and the extending direction of the cores a1 to an in the second end surface σ2 coincide with each other, each of the cores a1 to an in the first end surface σ1 at least partially overlaps any of the cores a1 to an in the second end surface σ2.

Thus, for two multi-core fibers MF, in a case where a first end surface σ1 of one multi-core fiber MF and a second end surface σ2 of the other multi-core fiber MF are connected to each other such that the two multi-core fibers MF are aligned in a single straight line, cores a1 to an of these two multi-core fibers MF can be optically coupled to each other. Here, the expression that the first end surface σ1 and the second end surface σ2 are connected to each other such that "the two multi-core fibers MF are arranged on a single straight line" means that the first end surface σ1 and the second end surface σ2 are connected to each other such that "an extending direction of the cores a1 to an of the one multi-core fiber MF and an extending direction of the cores a1 to an of the other multi-core fiber MF coincide with each other". Even if the inclination angle θ1 of the first end surface σ1 and the inclination angle θ2 of the second end surface σ2 are not precisely equal to each other, it is possible to achieve a similar effect, provided that the inclination angle θ1 of the first end surface σ1 and the inclination angle θ2 of the second end surface σ2 are equivalent to each other (substantially equal to each other).

According to the multi-core fiber MF of the present embodiment, it is defined that projections of the inclination direction v1 of the first end surface σ1 and the inclination direction v2 of the second end surface σ2 onto a flat plane orthogonal to an optical axis L0 extend in opposite directions. Thus, the multi-core fiber MF of the present embodiment satisfies, in addition to the above condition 1, the following condition 2.

Condition 2: In a case where the first end surface σ1 and the second end surface σ2 are brought into surface contact with each other so as to minimize the angle made by the extending direction of the cores a1 to an in the first end surface σ1 and the extending direction of the cores a1 to an in the second end surface σ2, cores which at least partially overlap each other have the same core number.

In the example shown in Fig. 1, pairs of cores which at least partially overlap each other are (1) a pair of the core a1 in the first end surface σ1 and the core a1 in the second end surface σ2, (2) a pair of the core a2 in the first end surface σ1 and the core a2 in the second end surface σ2, (3) a pair of the core a3 in the first end surface σ1 and the core a3 in the second end surface σ2, and (4) a pair of the core a4 in the first end surface σ1 and the core a4 in the second end surface σ2. Also in any of the four pairs, two cores constituting the pair have the same core number.

Thus, for two multi-core fibers MF, in a case where a first end surface σ1 of one multi-core fiber MF and a second end surface σ2 of the other multi-core fiber MF are connected to each other such that the two multi-core fibers MF are aligned in a single straight line as much as possible, cores having the same core number can be optically coupled to each other.

Further, according to the multi-core fiber MF of the present embodiment, in the first end surface σ1, the cores a1 to an are arranged in a linearly symmetric manner (substantially linearly symmetrically) with respect to a virtual axis L1 orthogonal to the inclination direction v1. Here, the expression that the cores a1 to an are arranged in a linearly symmetric manner with respect to the virtual axis L1 means that, in a case where the first end surface σ1 is inverted with respect to the virtual axis L1, each of the cores a1 to an at least partially overlaps any of the cores a1 to an. As is clear from the description "in the first end surface σ1" at the beginning of this paragraph, the virtual axis L1 is a straight line in the first end surface σ1 . In the present embodiment, the virtual axis L1 passes through a center of the first end surface σ1 (a center of the cladding). It is not essential that the virtual axis L1 pass through the center of the first end surface σ1, provided that the virtual axis L1 is orthogonal to the inclination direction v1.

With this, for two multi-core fibers MF, in a case where a first end surface σ1 of one multi-core fiber MF and a first end surface σ1 of the other multi-core fiber MF are connected to each other such that the two multi-core fibers MF are aligned in a single straight line as much as possible, cores a1 to an of these two multi-core fibers MF can be optically coupled to each other.

In the first end surface σ1, the cores a1 to an are more preferably arranged linearly symmetrically (completely linearly symmetrically) with respect to the virtual axis L1 orthogonal to the inclination direction v1. Here, the expression that the cores a1 to an are arranged linearly symmetrically with respect to the virtual axis L1 means that, in a case where the first end surface σ1 is inverted with respect to the virtual axis L1, each of the cores a1 to an overlaps any of the cores a1 to an without excess or deficiency. In the first end surface σ1, among the cores a1 to an, a pair of cores which are linearly symmetric with respect to the virtual axis L1 are away from the virtual axis L1 by equal distances.

With this, for two multi-core fibers MF, in a case where a first end surface σ1 of one multi-core fiber MF and a first end surface σ1 of the other multi-core fiber MF are connected to each other such that the two multi-core fibers MF are aligned in a single straight line as much as possible, the efficiency of coupling the cores a1 to an of these two multi-core fibers MF can be further improved.

Further, according to the multi-core fiber MF in accordance with the present embodiment, in the first end surface σ1, the above-described virtual axis L1 does not cross any of the cores a1 to an.

Thus, for two multi-core fibers MF, in a case where a first end surface σ1 of one multi-core fiber MF and a first end surface σ1 of the other multi-core fiber MF are connected to each other such that the two multi-core fibers MF are aligned in a single straight line as much as possible, cores having different core numbers are connected to each other. In the example shown in Fig. 1, the core a1 of the one multi-core fiber MF is connected to the core a2 of the other multi-core fiber MF, and the core a3 of the one multi-core fiber MF is connected to the core a4 of the other multi-core fiber MF.

Further, the multi-core fiber MF in accordance with the present embodiment is configured such that, in the second end surface σ2, the cores a1 to an are arranged in a linearly symmetric manner (substantially linearly symmetrically) with respect to a virtual axis L2 orthogonal to the inclination direction v2. Here, the expression that the cores a1 to an are arranged in a linearly symmetric manner with respect to the virtual axis L2 means that, in a case where the second end surface σ2 is inverted with respect to the virtual axis L2, each of the cores a1 to an at least partially overlaps any of the cores a1 to an. As is clear from the description "in the second end surface σ2" at the beginning of this paragraph, the virtual axis L2 is a straight line in the second end surface σ2. In the present embodiment, the virtual axis L2 passes through a center of the second end surface σ2 (a center of the cladding). It is not essential that the virtual axis L2 pass through the center of the second end surface σ2, provided that the virtual axis L2 is orthogonal to the inclination direction v2.

With this, for two multi-core fibers MF, in a case where a second end surface σ2 of one multi-core fiber MF and a second end surface σ2 of the other multi-core fiber MF are connected to each other such that the two multi-core fibers MF are aligned in a single straight line as much as possible, cores a1 to an of these two multi-core fibers MF can be optically coupled to each other.

In the second end surface σ2, the cores a1 to an are more preferably arranged linearly symmetrically (completely linearly symmetrically) with respect to the virtual axis L2 orthogonal to the inclination direction v2. Here, the expression that the cores a1 to an are arranged linearly symmetrically with respect to the virtual axis L2 means that, in a case where the second end surface σ2 is inverted with respect to the virtual axis L2, each of the cores a1 to an overlaps any of the cores a1 to an without excess or deficiency. In the second end surface σ2, among the cores a1 to an, a pair of cores which are linearly symmetric with respect to the virtual axis L2 are away from the virtual axis L2 by equal distances.

With this, for two multi-core fibers MF, in a case where a second end surface σ2 of one multi-core fiber MF and a second end surface σ2 of the other multi-core fiber MF are connected to each other such that the two multi-core fibers MF are aligned in a single straight line as much as possible, the efficiency of coupling the cores a1 to an of these two multi-core fibers MF can be further improved.

Further, the multi-core fiber MF in accordance with the present embodiment is configured such that, in the second end surface σ2, the above-described virtual axis L2 does not cross any of the cores a1 to an.

Thus, for two multi-core fibers MF, in a case where a second end surface σ2 of one multi-core fiber MF and a second end surface σ2 of the other multi-core fiber MF are connected to each other such that the two multi-core fibers MF are aligned in a single straight line as much as possible, cores having different core numbers are connected to each other. In the example shown in Fig. 1, the core a1 of the one multi-core fiber MF is connected to the core a2 of the other multi-core fiber MF, and the core a3 of the one multi-core fiber MF is connected to the core a4 of the other multi-core fiber MF.

The multi-core fiber MF shown in Fig. 1 is configured such that, in the first end surface σ1, the core a1 closest to the marker c and the core a2 second closest to the marker c are arranged so as to sandwich the virtual axis L1 therebetween. Thus, the marker c is disposed near the virtual axis L1. This makes it easy to observe the marker c together with the cores a1 to an, in a case where the first end surface σ1 of the multi-core fiber MF is observed from the front with use of a microscope or the like. This is because that, in a case where a focus of an objective lens is set on the virtual axis L1 in order to evenly suppress defocus of the cores a1 to an, the above arrangement can reduce defocus of the marker c. This also applies to multi-core fibers MF illustrated in Figs. 3 and 5, which will be described later.

Similarly, the multi-core fiber MF shown in Fig. 1 is configured such that, in the second end surface σ2, the core a1 closest to the marker c and the core a2 second closest to the marker c are arranged so as to sandwich the virtual axis L2 therebetween. Thus, the marker c is disposed near the virtual axis L2. This makes it easy to observe the marker c together with the cores a1 to an, in a case where the second end surface σ2 of the multi-core fiber MF is observed from the front with use of a microscope or the like. This is because that, in a case where a focus of an objective lens is set on the virtual axis L2 in order to evenly suppress defocus of the cores a1 to an, the above arrangement can reduce defocus of the marker c.

### (Variations of Multi-Core Fiber)

The following will describe, with reference to Fig. 2, a first variation of the multi-core fiber MF in accordance with the first embodiment. In Fig. 2, (a) is a front view of a first end surface σ1 and a second end surface σ2 of a multi-core fiber MF in accordance with the first variation. (b) is a front view of a first end surface σ1 and a second end surface σ2 of a multi-core fiber MF in accordance with a second variation. (c) is a front view of a first end surface σ1 and a second end surface σ2 of a multi-core fiber MF in accordance with a third variation.

As shown in (a) of Fig. 2, similarly to the multi-core fiber MF shown in Fig. 1, the multi-core fiber MF in accordance with the first variation is configured such that a virtual axis L1 does not cross any of cores a1 to an in the first end surface σ1. Note, however, the following. While the multi-core fiber MF shown in Fig. 1 is configured such that the cores a1 and a2 are arranged side by side across the virtual axis L1 in the first end surface σ1, the multi-core fiber MF in accordance with the first variation is configured such that the cores a1 and a4 are arranged side by side across the virtual axis L1 in the first end surface σ1. This also applies to the second end surface σ2.

Thus, for two multi-core fibers MF in accordance with the first variation, in a case where a first end surface σ1 of one multi-core fiber MF and a first end surface σ1 of the other multi-core fiber MF are connected to each other such that the two multi-core fibers MF are aligned in a single straight line as much as possible, all the cores a1 to an are connected to each other such that cores having different core numbers are connected to each other. In the example shown in (a) of Fig. 2, the core a1 of the one multi-core fiber MF is connected to the core a4 of the other multi-core fiber MF, and the core a2 of the one multi-core fiber MF is connected to the core a3 of the other multi-core fiber MF. This also applies to the second end surface σ2.

As shown in (b) of Fig. 2, unlike the multi-core fiber MF shown in Fig. 1, the multi-core fiber MF in accordance with the second variation is configured such that a virtual axis L1 crosses cores a2 and a4 in the first end surface σ1. This also applies to the second end surface σ2.

Thus, for two multi-core fibers MF in accordance with the second variation, in a case where a first end surface σ1 of one multi-core fiber MF and a first end surface σ1 of the other multi-core fiber MF are connected to each other such that the two multi-core fibers MF are aligned in a single straight line as much as possible, some of the cores a1 to an are connected to each other such that cores having different core numbers are connected to each other. In the example shown in (b) of Fig. 2, the core a1 of the one multi-core fiber MF is connected to the core a3 of the other multi-core fiber MF. The core a2 of the one multi-core fiber MF is connected to the core a2 of the other multi-core fiber MF, and the core a4 of the one multi-core fiber MF is connected to the core a4 of the other multi-core fiber MF. This also applies to the second end surface σ2.

The multi-core fiber MF shown in (b) of Fig. 2 is configured such that, in the first end surface σ1, the core a2 second closest to the marker c is disposed on the virtual axis L1. Thus, the marker c is disposed near the virtual axis L1. This makes it easy to observe the marker c together with the cores a1 to an, in a case where the first end surface σ1 of the multi-core fiber MF is observed from the front with use of a microscope or the like. This is because that, in a case where a focus of an objective lens is set on the virtual axis L1 in order to evenly suppress defocus of the cores a1 to an, the above arrangement can reduce defocus of the marker c. This also applies to multi-core fibers MF illustrated in (b) of Fig. 4 and (b) of Fig. 6, which will be described later.

As shown in (c) of Fig. 2, unlike the multi-core fiber MF shown in Fig. 1, the multi-core fiber MF in accordance with the third variation is configured such that a virtual axis L1 crosses cores a1 and a3 in the first end surface σ1. This also applies to the second end surface σ2.

Thus, for two multi-core fibers MF in accordance with the second variation, in a case where a first end surface σ1 of one multi-core fiber MF and a first end surface σ1 of the other multi-core fiber MF are connected to each other such that the two multi-core fibers MF are aligned in a single straight line as much as possible, some of the cores a1 to an are connected to each other such that cores having different core numbers are connected to each other. In the example shown in (c) of Fig. 2, the core a2 of the one multi-core fiber MF is connected to the core a4 of the other multi-core fiber MF. The core a1 of the one multi-core fiber MF is connected to the core a1 of the other multi-core fiber MF, and the core a3 of the one multi-core fiber MF is connected to the core a3 of the other multi-core fiber MF. This also applies to the second end surface σ2.

The multi-core fiber MF shown in (c) of Fig. 2 is configured such that, in the first end surface σ1, the core a1 closest to the marker c is disposed on the virtual axis L1. Thus, the marker c is disposed near the virtual axis L1. This makes it easy to observe the marker c together with the cores a1 to an, in a case where the first end surface σ1 of the multi-core fiber MF is observed from the front with use of a microscope or the like. This is because that, in a case where a focus of an objective lens is set on the virtual axis L1 in order to evenly suppress defocus of the cores a1 to an, the above arrangement can reduce defocus of the marker c. This also applies to multi-core fibers MF illustrated in (c) of Fig. 4 and (c) of Fig. 6, which will be described later.

Similarly, the multi-core fiber MF shown in (c) of Fig. 2 is configured such that, in the second end surface σ2, the core a1 closest to the marker c is disposed on the virtual axis L2. Thus, the marker c is disposed near the virtual axis L2. This makes it easy to observe the marker c together with the cores a1 to an, in a case where the second end surface σ2 of the multi-core fiber MF is observed from the front with use of a microscope or the like. This is because that, in a case where a focus of an objective lens is set on the virtual axis L2 in order to evenly suppress defocus of the cores a1 to an, the above arrangement can reduce defocus of the marker c.

Note that the multi-core fibers MF illustrated in Fig. 1, (b) of Fig. 2, and (c) of Fig. 2 have, as a common characteristic, the following characteristic: "In the first end surface σ1, a center of the marker c is included in an area between the virtual axis L1 and a straight line which passes through a center of, among the cores a1 to an, a core farthest from the virtual axis L1 and which is in parallel with the virtual axis L1." Thus, as compared with the multi-core fiber MF illustrated in (a) of Fig. 2, the multi-core fibers MF illustrated in Fig. 1, (b) of Fig. 2, and (c) of Fig. 2 each allow easier observation of the marker c together with the cores a1 to an, in a case where the observation is carried out on the first end surface σ1 of the multi-core fiber MF from the front with use of a microscope or the like. Further, this also applies to the second end surfaces σ2 of the multi-core fibers MF illustrated in Fig. 1, (b) of Fig. 2, and (c) of Fig. 2. Furthermore, this also applies to first end surfaces σ1 of multi-core fibers MF illustrated in Fig. 3, (b) of Fig. 4, (c) of Fig. 4, Fig. 5, (b) of Fig. 6, (c) of Fig. 6, Fig. 7, (b) of Fig. 8, and (c) of Fig. 8, which will be described later. Moreover, this also applies to second end surfaces σ2 of the multi-core fibers MF illustrated in Fig. 3, (b) of Fig. 4, (c) of Fig. 4, (a) of Fig. 6, (b) of Fig. 6, (c) of Fig. 6, (a) of Fig. 8, (b) of Fig. 8, and (c) of Fig. 8, which will be described later.

The multi-core fiber MF illustrated in Fig. 1 has the following characteristic: "In the first end surface σ1, a center of the marker c is included in an area between the virtual axis L1 and a straight line which passes through a center of, among the cores a1 to an, a core closest to the virtual axis L1 and which is in parallel with the virtual axis L1." Therefore, the center of the marker c is arranged so as to be even closer to the virtual axis L1. Thus, as compared with the multi-core fibers MF illustrated in (a) of Fig. 2, (b) of Fig. 2, and (c) of Fig. 2, the multi-core fiber MF illustrated in Fig. 1 allows even easier observation of the marker c together with the cores a1 to an, in a case where the observation is carried out on the first end surface σ1 of the multi-core fiber MF from the front with use of a microscope or the like. Further, this also applies to the second end surfaces σ2 of the multi-core fibers MF illustrated in Fig. 1. Further, this also applies to the first end surfaces σ1 of the multi-core fibers MF illustrated in Figs. 3, 5, and 7, which will be described later. Further, this also applies to the second end surfaces σ2 of the multi-core fibers MF illustrated in Fig. 3, (a) of Fig. 6, and (a) of Fig. 8, which will be described later.

### [Second Embodiment]

### (Configuration of Multi-Core Fiber)

The following will describe, with reference to Fig. 3, a configuration of a multi-core fiber MF in accordance with a second embodiment of the present invention. In Fig. 3, (a) is a side view of the multi-core fiber MF. (b) is a front view of one end surface (hereinafter, referred to as a "first end surface") σ1 of the multi-core fiber MF viewed in a direction of a sight line E1. (c) is a front view of the other end surface (hereinafter, referred to as a "second end surface") σ2 of the multi-core fiber MF viewed in a direction of a sight line E2. (d) is a perspective view of the multi-core fiber MF which is in a state where a first end surface σ1 and a second end surface σ2 abut on each other.

In the multi-core fiber MF in accordance with the first embodiment, it is defined that the projections of the inclination direction v1 of the first end surface σ1 and the inclination direction v2 of the second end surface σ2 onto the flat plane orthogonal to the optical axis L0 extend in opposite directions. In contrast to this, in the multi-core fiber MF in accordance with the second embodiment, it is defined that projections of an inclination direction v1 of the first end surface σ1 and an inclination direction v2 of the second end surface σ2 onto a flat plane orthogonal to an optical axis L0 extend in the same direction. Thus, the multi-core fiber MF in accordance with the second embodiment satisfies, in addition to the above condition 1, the following condition 3.

Condition 3: In a case where the first end surface σ1 and the second end surface σ2 are brought into surface contact with each other so as to minimize an angle made by an extending direction of cores a1 to an in the first end surface σ1 and an extending direction of cores a1 to an in the second end surface σ2, cores which at least partially overlap each other have different core numbers.

In the example shown in Fig. 3, pairs of cores which at least partially overlap each other are (1) a pair of the core a1 in the first end surface σ1 and the core a3 in the second end surface σ2, (2) a pair of the core a2 in the first end surface σ1 and the core a4 in the second end surface σ2, (3) a pair of the core a3 in the first end surface σ1 and the core a1 in the second end surface σ2, and (4) a pair of the core a4 in the first end surface σ1 and the core a2 in the second end surface σ2. Also in any of the four pairs, two cores constituting the pair have different core numbers.

With this, for two multi-core fibers MF, in a case where a first end surface σ1 of one multi-core fiber MF and a second end surface σ2 of the other multi-core fiber MF are connected to each other such that the two multi-core fibers MF are aligned in a single straight line as much as possible, cores having different core numbers can be optically coupled to each other.

### (Variations of Multi-Core Fiber)

The following will describe, with reference to Fig. 4, a first variation of the multi-core fiber MF in accordance with the second embodiment. In Fig. 4, (a) is a front view of a first end surface σ1 and a second end surface σ2 of a multi-core fiber MF in accordance with the first variation. (b) is a front view of a first end surface σ1 and a second end surface σ2 of a multi-core fiber MF in accordance with a second variation. (c) is a front view of a first end surface σ1 and a second end surface σ2 of a multi-core fiber MF in accordance with a third variation.

As the three variations illustrated in Fig. 2 can be arranged for the multi-core fiber MF illustrated in Fig. 1, the three variations illustrated in Fig. 4 can be arranged for the multi-core fiber MF illustrated in Fig. 3. The effects achieved by the multi-core fibers MF in accordance with the variations illustrated in Fig. 4 are similar to the effects achieved by the multi-core fibers MF in accordance with the variations illustrated in Fig. 2.

### [Third Embodiment]

### (Configuration of Multi-Core Fiber)

The following will describe, with reference to Fig. 5, a configuration of a multi-core fiber MF in accordance with a third embodiment of the present invention. In Fig. 5, (a) is a side view of the multi-core fiber MF. (b) is a front view of one end surface (hereinafter, referred to as a "first end surface") σ1 of the multi-core fiber MF viewed in a direction of a sight line E1. (c) is a front view of the other end surface (hereinafter, referred to as a "second end surface") σ2 of the multi-core fiber MF viewed in a direction of a sight line E2. (d) is a perspective view of the multi-core fiber MF which is in a state where a first end surface σ1 and a second end surface σ2 abut on each other.

In the multi-core fiber MF in accordance with the first embodiment, it is defined that the projections of the inclination direction v1 of the first end surface σ1 and the inclination direction v2 of the second end surface σ2 onto the flat plane orthogonal to the optical axis L0 extend in opposite directions. In contrast to this, in the multi-core fiber MF in accordance with the third embodiment, it is defined that projections of an inclination direction v1 of the first end surface σ1 and an inclination direction v2 of the second end surface σ2 onto a flat plane orthogonal to an optical axis L0 are orthogonal to each other. Thus, the multi-core fiber MF in accordance with the third embodiment satisfies, in addition to the above condition 1, the following condition 3.

Condition 3: In a case where the first end surface σ1 and the second end surface σ2 are brought into surface contact with each other so as to minimize an angle made by an extending direction of cores a1 to an in the first end surface σ1 and an extending direction of cores a1 to an in the second end surface σ2, cores which at least partially overlap each other have different core numbers.

In the example shown in Fig. 5, pairs of cores which at least partially overlap each other are (1) a pair of the core a1 in the first end surface σ1 and the core a2 in the second end surface σ2, (2) a pair of the core a2 in the first end surface σ1 and the core a3 in the second end surface σ2, (3) a pair of the core a3 in the first end surface σ1 and the core a4 in the second end surface σ2, and (4) a pair of the core a4 in the first end surface σ1 and the core a1 in the second end surface σ2. Also in any of the four pairs, two cores constituting the pair have different core numbers.

With this, for two multi-core fibers MF, in a case where a first end surface σ1 of one multi-core fiber MF and a second end surface σ2 of the other multi-core fiber MF are connected to each other such that the two multi-core fibers MF are aligned in a single straight line as much as possible, cores having different core numbers can be optically coupled to each other.

### (Variations of Multi-Core Fiber)

The following will describe, with reference to Fig. 6, three variations of the multi-core fiber MF in accordance with the third embodiment. In Fig. 6, (a) is a front view of a first end surface σ1 and a second end surface σ2 of a multi-core fiber MF in accordance with a first variation. (b) is a front view of a first end surface σ1 and a second end surface σ2 of a multi-core fiber MF in accordance with a second variation. (c) is a front view of a first end surface σ1 and a second end surface σ2 of a multi-core fiber MF in accordance with a third variation.

As the three variations illustrated in Fig. 2 can be arranged for the multi-core fiber MF illustrated in Fig. 1, the three variations illustrated in Fig. 6 can be arranged for the multi-core fiber MF illustrated in Fig. 5. The effects achieved by the multi-core fibers MF in accordance with the variations illustrated in Fig. 6 are similar to the effects achieved by the multi-core fibers MF in accordance with the variations illustrated in Fig. 2.

### [Fourth Embodiment]

### (Configuration of Multi-Core Fiber)

The following will describe, with reference to Fig. 7, a configuration of a multi-core fiber MF in accordance with a fourth embodiment of the present invention. In Fig. 7, (a) is a side view of the multi-core fiber MF. (b) is a front view of one end surface (hereinafter, referred to as a "first end surface") σ1 of the multi-core fiber MF viewed in a direction of a sight line E1. (c) is a front view of the other end surface (hereinafter, referred to as a "second end surface") σ2 of the multi-core fiber MF viewed in a direction of a sight line E2. (d) is a perspective view of the multi-core fiber MF which is in a state where a first end surface σ1 and a second end surface σ2 abut on each other.

In the multi-core fiber MF in accordance with the first embodiment, it is defined that the projections of the inclination direction v1 of the first end surface σ1 and the inclination direction v2 of the second end surface σ2 onto the flat plane orthogonal to the optical axis L0 extend in opposite directions. In contrast to this, in the multi-core fiber MF in accordance with the fourth embodiment, it is defined that projections of an inclination direction v1 of the first end surface σ1 and an inclination direction v2 of the second end surface σ2 onto a flat plane orthogonal to an optical axis L0 are orthogonal to each other. Thus, the multi-core fiber MF in accordance with the fourth embodiment satisfies, in addition to the above condition 1, the following condition 3.

Condition 3: In a case where the first end surface σ1 and the second end surface σ2 are brought into surface contact with each other so as to minimize an angle made by an extending direction of cores a1 to an in the first end surface σ1 and an extending direction of cores a1 to an in the second end surface σ2, cores which at least partially overlap each other have different core numbers.

In the example shown in Fig. 7, pairs of cores which at least partially overlap each other are (1) a pair of the core a1 in the first end surface σ1 and the core a4 in the second end surface σ2, (2) a pair of the core a2 in the first end surface σ1 and the core a1 in the second end surface σ2, (3) a pair of the core a3 in the first end surface σ1 and the core a2 in the second end surface σ2, and (4) a pair of the core a4 in the first end surface σ1 and the core a3 in the second end surface σ2. Also in any of the four pairs, two cores constituting the pair have different core numbers.

With this, for two multi-core fibers MF, in a case where a first end surface σ1 of one multi-core fiber MF and a second end surface σ2 of the other multi-core fiber MF are connected to each other such that the two multi-core fibers MF are aligned in a single straight line as much as possible, cores having different core numbers can be optically coupled to each other.

### (Variations of Multi-Core Fiber)

The following will describe, with reference to Fig. 8, three variations of the multi-core fiber MF in accordance with the fourth embodiment. In Fig. 8, (a) is a front view of a first end surface σ1 and a second end surface σ2 of a multi-core fiber MF in accordance with a first variation. (b) is a front view of a first end surface σ1 and a second end surface σ2 of a multi-core fiber MF in accordance with a second variation. (c) is a front view of a first end surface σ1 and a second end surface σ2 of a multi-core fiber MF in accordance with a third variation.

As the three variations illustrated in Fig. 2 can be arranged for the multi-core fiber MF illustrated in Fig. 1, the three variations illustrated in Fig. 8 can be arranged for the multi-core fiber MF illustrated in Fig. 7. The effects achieved by the multi-core fibers MF in accordance with the variations illustrated in Fig. 8 are similar to the effects achieved by the multi-core fibers MF in accordance with the variations illustrated in Fig. 2.

### [Supplementary Note]

In the foregoing embodiments, assumed as the multi-core fiber MF is a multi-core fiber not including a connection point, that is, a multi-core fiber in which a marker c is continuous from a first end surface σ1 to a second end surface σ2. However, the present invention is not limited to this. That is, the present invention encompasses a multi-core fiber including at least one connection point, that is, a multi-core fiber in which a marker c is not continuous from a first end surface σ1 to a second end surface σ2. For example, two multi-core fibers MF are prepared, and then a first end surface σ1 of one multi-core fiber MF and a first end surface σ1 of the other multi-core fiber MF are connected to each other. This can provide a multi-core fiber whose both end surfaces are second end surfaces σ2. In this case, the first end surfaces σ1 of the multi-core fibers MF may or may not be inclined. For another example, two multi-core fibers MF are prepared, and then a second end surface σ2 of one multi-core fiber MF and a second end surface σ2 of the other multi-core fiber MF are connected to each other. This can provide a multi-core fiber whose both ends are first end surfaces σ1. In this case, the second end surfaces σ2 of the multi-core fibers MF may or may not be inclined. The multi-core fibers obtained in this manner can also be encompassed in the present invention, provided that these multi-core fibers satisfy the above-described condition 1. In each of such multi-core fibers, in a case where the first end surface σ1 and the second end surface σ2 are brought into surface contact with each other so as to minimize an angle made by an extending direction of cores a1 to an in the first end surface σ1 and an extending direction of cores a1 to an in the second end surface σ2, the following mode can be achieved. That is, among sets of cores at least partially overlapping each other, some sets are each constituted by cores having the same core number and the other sets are each constituted by cores having different core numbers.

### [Fifth Embodiment]

### (Configuration of Optical Device)

The following will describe, with reference to Fig. 9, a configuration of an optical device OD1 in accordance with a fifth embodiment of the present invention. In Fig. 9, (a) is a side view of the optical device OD1. (b) is a front view of one end surface of the optical device OD1 viewed in a direction of a sight line E1. (c) is a front view of the other end surface of the optical device OD1 viewed in a direction of a sight line E2.

The optical device OD1 includes a multi-core fiber MF and single-core connectors C1 and C2 provided to both ends of the multi-core fiber MF.

The multi-core fiber MF may be any of the multi-core fibers MF illustrated in Figs. 1 to 8. Illustrated as the multi-core fiber MF in Fig. 9 is the multi-core fiber MF illustrated in Fig. 1.

The first single-core connector C1 is provided at one of the ends of the multi-core fiber MF. An end surface of the first single-core connector C1 is inclined so as to be flush with the first end surface σ1 of the multi-core fiber MF. Among four side surfaces of the first single-core connector C1, a side surface which lays ahead in the inclination direction v1 of the first end surface σ1 is provided with a key K1. The key K1 is, for example, a rectangular parallelepiped projection protruding from the side surface of the first single-core connector C1.

The second single-core connector C2 is provided at the other of the ends of the multi-core fiber MF. An end surface of the second single-core connector C2 is inclined so as to be flush with the second end surface σ2 of the multi-core fiber MF. Among four side surfaces of the second single-core connector C2, a side surface which lays ahead in the inclination direction v2 of the second end surface σ2 is provided with a key K2. The key K2 is, for example, a rectangular parallelepiped projection protruding from the side surface of the second single-core connector C2.

With this, for the two optical devices OD1, in a case where the first single-core connector C1 of the one optical device OD1 and the second single-core connector C2 of the other optical device OD1 are connected to each other such that the key K1 and the key K2 are positioned opposite to each other, cores a1 to an of the multi-core fibers MF included in these two optical devices OD1 can be optically coupled to each other.

The description here has dealt with the configuration in which the single-core connectors are provided to both ends of the multi-core fiber MF. However, the present invention is not limited to this. That is, the present invention also encompasses a configuration in which a single-core connector is provided to one end of a multi-core fiber MF. That is, the present invention also encompasses a configuration achieved by omitting, from the optical device OD1 illustrated in Fig. 9, one of the first single-core connector C1 and the second single-core connector C2. In this case, an end surface of the multi-core fiber MF which end surface is not provided with a single-core connector may or may not be inclined. The multi-core fiber MF may be a multi-core fiber 103 constituting a Fan-In/Fan-Out (FI/FO) device FD1, as shown in (a) of Fig. 14. Here, the FI/FO device FD1 includes an optical path conversion section 101 having an optical path conversion function, a multi-core fiber 103 provided to one side of the optical path conversion section, and a plurality of single-core fibers 102a to 102d provided to the other side of the optical path conversion section. The number of single-core fibers 102a to 102d corresponds to the number of cores in the multi-core fiber 103. For example, the number of single-core fibers 102a to 102d is equal to the number of cores in the multi-core fiber. The end surface of the multi-core fiber MF which end surface is not provided with the single-core connector may be connected to a multi-core fiber 103 (which may sometimes be called a "pig-tail fiber") constituting a FI/FO device FD2, as shown in (b) of Fig. 14. In any of the above cases, it is possible to prevent or suppress edge reflection which may otherwise be caused by an end surface of the multi-core fiber MF and an end surface of the optical path conversion section 101, which can make port number management in the optical path conversion section easier.

### [Sixth Embodiment]

### (Configuration of Optical Device)

The following will describe, with reference to Fig. 10, a configuration of an optical device OD2 in accordance with a sixth embodiment of the present invention. In Fig. 10, (a) is a side view of the optical device OD2. (b) is a front view of one end surface of the optical device OD2 viewed in a direction of a sight line E1. (c) is a front view of the other end surface of the optical device OD2 viewed in a direction of a sight line E2.

The optical device OD2 includes a multi-core fiber bundle MFB constituted by a plurality of multi-core fibers MF and multi-core connectors C3 and C4 provided to both ends of the multi-core fiber bundle MFB.

Illustrated as each of the multi-core fibers MF constituting the multi-core fiber MFB in Fig. 10 is the multi-core fiber MF shown in Fig. 1. Note that each of the multi-core fibers MF constituting the multi-core fiber bundle MFB may be any one of the multi-core fibers MF shown in Figs. 1 to 8. For example, each of the multi-core fibers MF constituting the multi-core fiber bundle MFB may be the multi-core fiber MF illustrated in (b) of Fig. 2 or the multi-core fiber MF illustrated in (c) of Fig. 2.

The first multi-core connector C3 is provided at one end of the multi-core fiber bundle MFB. The multi-core fibers MF constituting the multi-core fiber bundle MFB are fixed to the first multi-core connector C3 such that (i) end surfaces (first end surfaces σ1 in the example shown in Fig. 10) which end surfaces are closer to the first multi-core connector C3 are all inclined in a specific inclination direction (the inclination direction v1 in the example shown in Fig. 10) and (ii) these end surfaces become flush with each other. Further, among four side surfaces of the first multi-core connector C3, a side surface which lays ahead in the inclination direction (the inclination direction v1 in the example shown in Fig. 10) of the end surfaces (the first end surfaces σ1 shown in Fig. 10) of the multi-core fibers MF constituting the multi-core fiber bundle MFB which end surfaces are closer to the first multi-core connector C3 is provided with a key K3. The key K3 is, for example, a rectangular parallelepiped projection protruding from the side surface of the first multi-core connector C3.

The second multi-core connector C4 is provided at the other end of the multi-core fiber bundle MFB. The multi-core fibers MF constituting the multi-core fiber bundle MFB are fixed to the second multi-core connector C4 such that (i) end surfaces (second end surfaces σ2 in the example shown in Fig. 10) which end surfaces are closer to the second multi-core connector C4 are all inclined in a specific inclination direction (the inclination direction v2 in the example shown in Fig. 10) and (ii) these end surfaces become flush with each other. Further, among four side surfaces of the second multi-core connector C4, a side surface which lays ahead in the inclination direction (the inclination direction v2 in the example shown in Fig. 10) of the end surfaces (the second end surface σ2 shown in Fig. 10) of the multi-core fibers MF constituting the multi-core fiber bundle MFB which end surfaces are closer to the second multi-core connector C4 is provided with a key K4. The key K4 is, for example, a rectangular parallelepiped projection protruding from the side surface of the second multi-core connector C4.

With this, for the two optical devices OD2, the first multi-core connector C3 of the one optical device OD2 and the second multi-core connector C4 of the other optical device OD2 are connected to each other such that the key K3 and the key K4 are positioned opposite to each other, cores a1 to an of the multi-core fibers MF included in these two optical devices OD2 can be optically coupled to each other.

Instead of the first multi-core connector C3, single-core connectors may be provided to respective one ends of the multi-core fibers MF and these multi-core connectors may be integrated together. Similarly, instead of the second multi-core connectors C4, single-core connectors may be provided to the respective other ends of the multi-core fibers MF and these multi-core connectors may be integrated together.

The description here has dealt with the configuration in which the multi-core connectors are provided to both ends of the multi-core fiber bundle MFB. However, the present invention is not limited to this. That is, the present invention also encompasses a configuration in which a multi-core connector is provided to one end of a multi-core fiber bundle MFB. That is, the present invention also encompasses a configuration obtained by omitting, from the optical device OD2 illustrated in Fig. 10, one of the first multi-core connector C3 and the second multi-core connector C4. In this case, end surfaces of the multi-core fibers MF which end surfaces are not provided with a multi-core connector may or may not be inclined. Each of the multi-core fibers MF may be a multi-core fiber 103 constituting a Fan-In/Fan-Out (FI/FO) device FD1, as shown in (a) of Fig. 14. The end surfaces of the multi-core fibers MF which end surfaces are not provided with the multi-core connectors may be connected to a multi-core fiber 103 (which may sometimes be called a "pig-tail fiber") constituting a Fan-In/Fan-Out (FI/FO) device FD2, as shown in (b) of Fig. 14.

In the first multi-core connector C3, a direction of arrangement of the multi-core fibers MF constituting the multi-core fiber bundle MFB may be any direction. Note, however, that the direction of arrangement in the multi-core fiber bundle MFB is preferably a direction which is perpendicular to the inclination direction of the end surface of the first multi-core connector C3 (i.e., the inclination direction v1 of the end surface σ1 of the multi-core fiber MF), as shown in (b) of Fig. 10. Particularly, in a case where the multi-core fiber bundle MFB is arranged in a line, the direction of arrangement in the multi-core fiber bundle MFB is preferably a direction which is perpendicular to the inclination direction of the end surface of the first multi-core connector C3. Alternatively, the direction of arrangement in the multi-core fiber bundle MFB is preferably a direction which is in parallel with the inclination direction of the first multi-core connector C3. The reason for this is as follows. That is, in a case where two first multi-core connectors C3 are connected to each other or in a case where the first multi-core connector C3 is connected to the second multi-core connector C4, fitting these connectors to each other such that inclination directions of end surfaces of these connectors match enables rotation alignment of the multi-core fibers MF. This also applies to the second multi-core connector C4.

### (Variations of Optical Device)

The following will describe a variation of the optical device OD2 with reference to Fig. 11. In Fig. 11, (a) is a front view of an optical device OD2 in accordance with a first variation. In Fig. 11, (b) is a front view of an optical device OD2 in accordance with a second variation. In Fig. 11, (c) is a front view of an optical device OD2 in accordance with a third variation.

In the optical device OD2 in accordance with the first variation, as shown in (a) of Fig. 11, a multi-core fiber bundle MFB includes at least two multi-core fibers MF in which cores having the same core number at least partially overlap each other as a result of subjecting, to translation and inversion, end surfaces of the at least two multi-core fibers MF which end surfaces are closer to the first multi-core connector C3. (a) of Fig. 11 illustrates that this relation is satisfied by a multi-core fiber MF which is first from the left and a multi-core fiber MF which is second from the left. With this, in a case where the first multi-core connectors C3 are connected to each other, it is possible to cause change in the same core numbers in the above-described at least two multi-core fibers MF. In the example shown in (a) of Fig. 11, in the multi-core fiber MF which is first from the left and the multi-core fiber MF which is second from the left, the core a1 and the core a2 are connected to each other (change between the core number 1 and the core number 2 occurs), and the core a3 and the core a4 are connected to each other (change between the core number 3 and the core number 4 occurs). Further, the above configuration can make it easy to manage the core numbers in the multi-core fibers at the time of connection of two multi-core fibers MF for network construction.

Assumed as the above-described inversion can be inversion with respect to an axis which is in parallel with inclination directions of the multi-core fibers MF or inversion with respect to an axis perpendicular to the inclination directions of the multi-core fibers MF. In any of these cases, the above-described effect can be attained. Further, assumed as the above-described translation can be translation along a direction which is in parallel with the inclination direction of the end surface of the first multi-core connector C3 or translation along a direction which is perpendicular to the inclination direction of the end surface of the first multi-core connector C3. In the former case, the above-described at least two multi-core fibers MF are arranged in parallel with the inclination direction of the end surface of the first multi-core connector C3. Meanwhile, in the latter case, the above-described at least two multi-core fibers MF are arranged so as to be perpendicular to the inclination direction of the end surface of the first multi-core connector C3. In any of these cases, the above-described effect can be attained. Further, particularly in the latter case, distances between (i) a virtual axis which is perpendicular to the inclination direction of the end surface of the first multi-core connector C3 and (ii) centers of markers c in the above-described at least two multi-core fibers MF are equal to each other. As a result, in a case where the end surface of the multi-core connector C3 is observed from the front with use of a microscope or the like, setting the focus on this virtual axis makes it easy to simultaneously observe the markers c of the above-described at least two multi-core fibers MF.

Note that all the multi-core fibers MF constituting the multi-core fiber bundle MFB preferably satisfy the above-described relation of translation and inversion. This makes it possible to cause change in the same core numbers in all the multi-core fibers MF constituting the multi-core fiber bundle MFB. Particularly, in a case where the above-described translation is translation along a direction perpendicular to the inclination direction of the end surface of the first multi-core connector C3, the above configuration makes it easy to simultaneously observe the markers c of all the multi-core fibers MF constituting the multi-core fiber bundle MFB.

In the optical device OD2 in accordance with the second variation, as shown in (b) of Fig. 11, a multi-core fiber bundle MFB includes at least two multi-core fibers MF in which cores having the same core number at least partially overlap each other, as a result of subjecting, to translation and rotation, end surfaces of the at least two multi-core fibers MF which end surfaces are closer to the first multi-core connector C3. (b) of Fig. 11 illustrates that this relation is satisfied by a multi-core fiber MF which is first from the left and a multi-core fiber MF which is second from the left. With this, in a case where the first multi-core connectors C3 are connected to each other, it is possible to cause change in different core numbers in the above-described at least two multi-core fibers MF. In the example shown in (b) of Fig. 11, in the multi-core fiber MF which is first from the left, the core a1 and the core a2 are connected to each other (change in the core number 1 and the core number 2 occurs), and the core a3 and the core a4 are connected to each other (change in the core number 3 and the core number 4 occurs). Meanwhile, in the multi-core fiber MF which is second from the left, the core a1 and the core a4 are connected to each other (change in the core number 1 and the core number 4 occurs), and the core a2 and the core a3 are connected to each other (change in the core number 2 and the core number 3 occurs). This can enhance a degree of freedom in wiring carried out to construct a network with use of the optical device OD2.

In a case where arrangement of cores a1 to an in a multi-core fiber MF has n-fold symmetry, assumed as the above-described rotation can be rotation of m×360°/n (m is a natural number which is not less than 1 and not more than n-1). For example, in a case where arrangement of the cores a1 to a4 in the multi-core fiber MF has four-fold symmetry, 90° rotation, 180° rotation, and 270° rotation are assumed.

In the optical device OD2 in accordance with the third variation, as shown in (c) of Fig. 11, the multi-core fiber bundle MFB is constituted by a first multi-core fiber group MFB1 and a second multi-core fiber group MFB2. The first multi-core connector MFB1 is a group of a plurality of (four in the example illustrated in (c) of Fig. 11) multi-core fibers MF whose end surfaces closer to the first multi-core connector C3 are aligned along an axis L on one side of the axis L. The second multi-core fiber group MFB2 is a group of a plurality of (four in the example illustrated in (c) of Fig. 11) multi-core fibers MF whose end surfaces closer to the first multi-core connector C3 are aligned along the axis L on the other side of the axis L. Here, the axis L is an axis orthogonal to an inclination direction of the end surfaces of the multi-core connectors MF which end surfaces are closer to the first multi-core connector C3.

The multi-core fibers MF constituting the first multi-core fiber group MFB1 and the multi-core fibers MF constituting the second multi-core fiber group MFB2 have been subjected to rotation alignment such that distances from the markers c to the above axis L are shorter than distances from the cores a1 to an to the above axis L. Thus, in each of the multi-core fibers MF, the marker c is disposed near the above axis L. In observing the end surfaces closer to the first multi-core connector C3 from the front with use of a microscope or the like, a focus of an objective lens is set on the above axis L. During this, thanks to the arrangement in which the marker c is disposed near the above axis L, it is easy to observe the marker c.

In the first multi-core connector C3, the plurality of multi-core fibers MF constituting the multi-core fiber bundle MFB may be arranged in any manner. However, in a case where the multi-core fibers MF are arranged in matrix where a row direction is a direction which is in parallel with the inclination direction of the end surface of the first multi-core connector C3 and a column direction which is a direction perpendicular to the inclination direction of the end surface of the first multi-core connector C3, it is preferable that the number of rows be smaller than the number of columns. This is because that, in a case where the end surface of the first multi-core connector C3 is observed from the front with use of a microscope or the like, the above arrangement makes it even easier to observe the marker c in each multi-core fiber MF.

### [Seventh Embodiment]

The following will describe, with reference to Fig. 12, a multi-core fiber assembly MFS in accordance with a seventh embodiment of the present invention. In Fig. 12, (a) is a side view of the multi-core fiber assembly MFS and (b) is a perspective view of the multi-core fiber assembly MFS.

The multi-core fiber assembly MFS includes a first multi-core fiber MF1 and a second multi-core fiber MF2. The first multi-core fiber MF1 and the second multi-core fiber MF2 may or may not be connected to each other. When the first multi-core fiber MF1 and the second multi-core fiber MF2 are connected to each other, the later-described first end surface Σ1 and the later-described second end surface Σ2 are connected to each other (e.g., via connector connection or fusion splicing).

The first multi-core fiber MF1 is configured similarly to the multi-core fiber MF shown in Fig. 1. However, in the first multi-core fiber MF1, the first end surface σ1 essentially needs to be inclined but the second end surface σ2 does not essentially need to be inclined. Hereinafter, an end surface of the first multi-core fiber MF1 which end surface essentially needs to be inclined, that is, an end surface corresponding to the first end surface σ1 of the multi-core fiber MF shown in Fig. 1 will be called a "first end surface Σ1".

The second multi-core fiber MF2 is configured similarly to the multi-core fiber MF shown in Fig. 1. However, in the second multi-core fiber MF2, the second end surface σ2 essentially needs to be inclined but the first end surface σ1 does not essentially need to be inclined. Hereinafter, an end surface of the second multi-core fiber MF2 which end surface essentially needs to be inclined, that is, an end surface corresponding to the second end surface σ2 of the multi-core fiber MF shown in Fig. 1 will be called a "second end surface Σ2".

An inclination direction v1 of the first end surface Σ1 and an inclination direction v2 of the second end surface Σ2 are defined so as to satisfy the following condition 1.

Condition 1: In a case where the first end surface Σ1 and the second end surface Σ2 are brought into surface contact with each other so as to minimize an angle made by an extending direction of the cores a1 to an in the first end surface Σ1 and an extending direction of the cores a1 to an in the second end surface Σ2, each of the cores a1 to an in the first end surface Σ1 at least partially overlaps any of the cores a1 to an in the second end surface Σ2.

With this, in a case where the first end surface Σ1 of the first multi-core fiber MF1 and the second end surface Σ2 of the second multi-core fiber MF2 are connected to each other such that the first multi-core fiber MF1 and the second multi-core fiber MF2 are aligned in a single straight line as much as possible, the cores a1 to an in the first multi-core fiber MF1 and the cores a1 to an in the second multi-core fiber MF2 can be optically coupled to each other. Here, the expression that the first end surface Σ1 and the second end surface Σ2 are connected to each other "such that the first multi-core fiber MF1 and the second multi-core fiber MF2 are aligned in a single straight line as much as possible" means that the first end surface Σ1 and the second end surface Σ2 are connected to each other "so as to minimize the angle made by the extending direction of the cores a1 to an in the first multi-core fiber MF1 and the extending direction of the cores a1 to an in the second multi-core fiber MF2".

Note that the inclination angle θ1 of the first end surface Σ1 and the inclination angle θ2 of the second end surface Σ2 may or may not be equal to each other. The inclination angle θ1 of the first end surface Σ1 and the inclination angle θ2 of the second end surface Σ2 are preferably equivalent to each other (substantially equal to each other), more preferably equal to each other (completely equal to each other). Here, the expression that the inclination angle θ1 of the first end surface Σ1 and the inclination angle θ2 of the second end surface Σ2 are equivalent to each other (substantially equal to each other) means, for example, that a difference |θ1-θ2| is not more than 2° or not more than 0.4°.

In a case where the inclination angle θ1 of the first end surface Σ1 and the inclination angle θ2 of the second end surface Σ2 are equal to each other, a minimum value of the angle made by the extending direction of the cores a1 to an in the first end surface Σ1 and the extending direction of the cores a1 to an in the second end surface Σ2 is 0°. That is, minimizing the angle made by the extending direction of the cores a1 to an in the first end surface Σ1 and the extending direction of the cores a1 to an in the second end surface Σ2 is equivalent to making the extending direction of the cores a1 to an in the first end surface Σ1 and the extending direction of the cores a1 to an in the second end surface Σ2 coincide with each other. Therefore, the above condition 1 is equivalent to the following condition 1'.

Condition 1': In a case where the first end surface Σ1 and the second end surface Σ2 are brought into surface contact with each other so as to make the extending direction of the cores a1 to an in the first end surface Σ1 and the extending direction of the cores a1 to an in the second end surface Σ2 coincide with each other, each of the cores a1 to an in the first end surface Σ1 at least partially overlaps any of the cores a1 to an in the second end surface Σ2.

With this, in a case where the first end surface Σ1 of the first multi-core fiber MF1 and the second end surface Σ2 of the second multi-core fiber MF2 are connected to each other such that the first multi-core fiber MF1 and the second multi-core fiber MF2 are aligned in a single straight line, the cores a1 to an in the first multi-core fiber MF1 and the cores a1 to an in the second multi-core fiber MF2 can be optically coupled to each other. Here, the expression that the first end surface Σ1 and the second end surface Σ2 are connected to each other "such that the first multi-core fiber MF1 and the second multi-core fiber MF2 are aligned in a single straight line" means that the first end surface Σ1 and the second end surface Σ2 are connected to each other "so as to make the extending direction of the cores a1 to an in the first multi-core fiber MF1 and the extending direction of the cores a1 to an in the second multi-core fiber MF2 coincide with each other". Even if the inclination angle of the first end surface Σ1 and the inclination angle θ2 of the second end surface Σ2 are not precisely equal to each other, it is possible to achieve a similar effect, provided that the inclination angle θ1 of the first end surface Σ1 and the inclination angle θ2 of the second end surface Σ2 are equivalent to each other (substantially equal to each other).

In the multi-core fiber assembly MFS in accordance with the present embodiment, the inclination direction v1 of the first end surface Σ1 of the first multi-core fiber MF1 and the inclination direction v2 of the second end surface Σ2 of the second multi-core fiber MF2 are defined so as to satisfy, in addition to the above-described condition 1, the following condition 2.

Condition 2: In a case where the first end surface Σ1 and the second end surface Σ2 are brought into surface contact with each other so as to minimize the angle made by the extending direction of the cores a1 to an in the first end surface Σ1 and the extending direction of the cores a1 to an in the second end surface Σ2, cores which at least partially overlap each other have the same core number.

In the example shown in Fig. 12, pairs of cores which at least partially overlap each other are (1) a pair of the core a1 in the first end surface Σ1 and the core a1 in the second end surface Σ2, (2) a pair of the core a2 in the first end surface Σ1 and the core a2 in the second end surface Σ2, (3) a pair of the core a3 in the first end surface Σ1 and the core a3 in the second end surface Σ2, and (4) a pair of the core a4 in the first end surface Σ1 and the core a4 in the second end surface Σ2. Also in any of the four pairs, two cores constituting the pair have the same core number.

With this, in a case where the first end surface Σ1 of the first multi-core fiber MF1 and the second end surface Σ2 of the second multi-core fiber MF2 are connected to each other such that the first multi-core fiber MF1 and the second multi-core fiber MF2 are aligned in a single straight line as much as possible, cores having the same core number can be optically coupled to each other.

An end of the first multi-core fiber MF1 which end is closer to the first end surface Σ1 may be provided with a first single-core connector C1, as shown in (c) of Fig. 12. Similarly, an end of the second multi-core fiber MF2 which end is closer to the second end surface Σ2 may be provided with a second single-core connector C2, as shown in (c) of Fig. 12. Configurations and the like of the first single-core connector C1 and the second single-core connector C2 are as described with reference to Fig. 9. Therefore, descriptions thereof are omitted here.

The present embodiment employs, as the first multi-core fiber MF1, the multi-core fiber having the inclination direction v1 being from a center of the first end surface Σ1 toward an intermediate point between the cores a4 and a1. However, the first multi-core fiber MF1 is not limited to this. Each of the following multi-core fibers can also be used as the first multi-core fiber MF1: (1) a multi-core fiber having an inclination direction v1 being from a center of a first end surface Σ1 toward an intermediate point between cores a1 and a2; (2) a multi-core fiber having an inclination direction v1 being from a center of a first end surface Σ1 toward an intermediate point between cores a2 and a3; and (3) a multi-core fiber having an inclination direction v1 being from a center of a first end surface Σ1 toward an intermediate point between cores a3 and a4. Further, each of the following multi-core fibers can also be used as the first multi-core fiber MF1: (1) a multi-core fiber having an inclination direction v1 being from a center of a first end surface Σ1 toward a core a1; (2) a multi-core fiber having an inclination direction v1 being from a center of a first end surface Σ1 toward a core a2; (3) a multi-core fiber having an inclination direction v1 being from a center of a first end surface Σ1 toward a core a3; and (4) a multi-core fiber having an inclination direction v1 being from a center of a first end surface Σ1 toward a core a4. This also applies to the second multi-core fiber MF2.

### [Eighth Embodiment]

The following will describe, with reference to Fig. 13, a multi-core fiber assembly MFS in accordance with a seventh embodiment of the present invention. In Fig. 13, (a) is a side view of the multi-core fiber assembly MFS and (b) is a perspective view of the multi-core fiber assembly MFS.

The multi-core fiber assembly MFS includes a first multi-core fiber MF1 and a second multi-core fiber MF2. The first multi-core fiber MF1 and the second multi-core fiber MF2 may or may not be connected to each other. When the first multi-core fiber MF1 and the second multi-core fiber MF2 are connected to each other, the later-described first end surface Σ1 and the later-described second end surface Σ2 are connected to each other (e.g., via fusion splicing).

The first multi-core fiber MF1 is configured similarly to the multi-core fiber MF shown in Fig. 1. However, in the first multi-core fiber MF1, the first end surface σ1 essentially needs to be inclined but the second end surface σ2 does not essentially needs to be inclined. An end surface of the first multi-core fiber MF1 which end surface essentially needs to be inclined, that is, an end surface corresponding to the first end surface σ1 of the multi-core fiber MF shown in Fig. 1 will be called a "first end surface Σ1".

The second multi-core fiber MF2 is configured similarly to the multi-core fiber MF shown in Fig. 1. However, in the second multi-core fiber MF2, the first end surface σ1 essentially needs to be inclined but the second end surface σ2 does not essentially need to be inclined. An end surface of the second multi-core fiber MF2 which end surface essentially needs to be inclined, that is, an end surface corresponding to the first end surface σ1 of the multi-core fiber MF shown in Fig. 1 will be called a "second end surface Σ2".

In the multi-core fiber assembly MFS in accordance with the sixth embodiment, the inclination direction v1 of the first end surface Σ1 and the inclination direction v2 of the second end surface Σ2 are defined so as to satisfy, in addition to the above-described condition 1, the above-described condition 2. In contrast to this, in the multi-core fiber assembly MFS in accordance with the seventh embodiment, the inclination direction v1 of the first end surface Σ1 and the inclination direction v2 of the second end surface Σ2 are defined so as to satisfy, in addition to the above-described condition 1, the following condition 3.

Condition 3: In a case where the first end surface Σ1 and the second end surface Σ2 are brought into surface contact with each other so as to minimize an angle made by an extending direction of cores a1 to an in the first end surface Σ1 and an extending direction of cores a1 to an in the second end surface Σ2, cores which at least partially overlap each other have different core numbers.

In the example shown in Fig. 13, pairs of cores which at least partially overlap each other are (1) a pair of the core a1 in the first end surface Σ1 and the core a2 in the second end surface Σ2, (2) a pair of the core a2 in the first end surface Σ1 and the core a1 in the second end surface Σ2, (3) a pair of the core a3 in the first end surface Σ1 and the core a4 in the second end surface Σ2, and (4) a pair of the core a4 in the first end surface Σ1 and the core a3 in the second end surface Σ2. Also in any of the four pairs, two cores constituting the pair have different core numbers.

With this, in a case where the first end surface Σ1 of the first multi-core fiber MF1 and the second end surface Σ2 of the second multi-core fiber MF2 are connected to each other such that the first multi-core fiber MF1 and the second multi-core fiber MF2 are aligned in a single straight line as much as possible, cores having different core numbers can be optically coupled to each other.

An end of the first multi-core fiber MF1 which end is closer to the first end surface Σ1 may be provided with a first single-core connector C1, as shown in (c) of Fig. 13. Similarly, an end of the second multi-core fiber MF2 which end is closer to the second end surface Σ2 may be provided with a second single-core connector C2, as shown in (c) of Fig. 13. Configurations and the like of the first single-core connector C1 and the second single-core connector C2 are as described with reference to Fig. 9. Therefore, descriptions thereof are omitted here.

The present embodiment employs, as the first multi-core fiber MF1, the multi-core fiber having the inclination direction v1 being from a center of the first end surface Σ1 toward an intermediate point between the cores a4 and a1. However, the first multi-core fiber MF1 is not limited to this. Each of the following multi-core fibers can also be used as the first multi-core fiber MF1: (1) a multi-core fiber having an inclination direction v1 being from a center of a first end surface Σ1 toward an intermediate point between cores a1 and a2; (2) a multi-core fiber having an inclination direction v1 being from a center of a first end surface Σ1 toward an intermediate point between cores a2 and a3; and (3) a multi-core fiber having an inclination direction v1 being from a center of a first end surface Σ1 toward an intermediate point between cores a3 and a4. Further, each of the following multi-core fibers can also be used as the first multi-core fiber MF1: (1) a multi-core fiber having an inclination direction v1 being from a center of a first end surface Σ1 toward a core a1; (2) a multi-core fiber having an inclination direction v1 being from a center of a first end surface Σ1 toward a core a2; (3) a multi-core fiber having an inclination direction v1 being from a center of a first end surface Σ1 toward a core a3; and (4) a multi-core fiber having an inclination direction v1 being from a center of a first end surface Σ1 toward a core a4. This also applies to the second multi-core fiber MF2.

Aspects of the present invention can also be expressed as follows:
A multi-core fiber in accordance with a first aspect of the present invention employs a configuration of a multi-core fiber including: a cladding; a plurality of cores formed inside the cladding; and a first end surface and a second end surface each of which is inclined so as not to be orthogonal to an extending direction of the plurality of cores, inclination directions of the first end surface and the second end surface being set so that, in a case where the first end surface and the second end surface are brought into surface contact with each other so as to minimize an angle made by an extending direction of the plurality of cores in the first end surface and an extending direction of the plurality of cores in the second end surface, each of the plurality of cores in the first end surface at least partially overlaps any of the plurality of cores in the second end surface.

A multi-core fiber in accordance with a second aspect of the present invention employs, in addition to the configuration of the first aspect, a configuration wherein: an inclination angle of the first end surface and an inclination angle of the second end surface are equivalent to each other.

A multi-core fiber in accordance with a third aspect of the present invention employs, in addition to the configuration of the first or second aspect, a configuration wherein: in the first end surface and the second end surface, core numbers of the plurality of cores are identifiable; and in a case where the first end surface and the second end surface are brought into surface contact with each other so as to minimize the angle, cores which at least partially overlap each other have a same core number.

A multi-core fiber in accordance with a fourth aspect of the present invention employs, in addition to the configuration of the first or second aspect, a configuration wherein: in the first end surface and the second end surface, core numbers of the plurality of cores are identifiable; and in a case where the first end surface and the second end surface are brought into surface contact with each other so as to minimize the angle, cores which at least partially overlap each other have different core numbers.

A multi-core fiber in accordance with a fifth aspect of the present invention employs, in addition to the configuration of any one of the first to fourth aspects, a configuration wherein: in each of the first end surface and the second end surface, the plurality of cores are arranged in a linearly symmetric manner with respect to a virtual axis which is orthogonal to the inclination direction and which passes through a center of the cladding.

A multi-core fiber in accordance with a sixth aspect of the present invention employs, in addition to the configuration of the fifth aspect, a configuration wherein: in the first end surface and the second end surface, the virtual axis does not cross any of the plurality of cores.

A multi-core fiber in accordance with a seventh aspect of the present invention employs, in addition to the configuration of the fifth or sixth aspect, a configuration wherein: the multi-core fiber further include a marker formed in the cladding, wherein in each of the first end surface and the second end surface, a center of the marker is disposed between (i) the virtual axis and (ii) a straight line which passes through a center of, among the plurality of cores, a core farthest from the virtual axis and which is in parallel with the virtual axis.

An optical device in accordance with an eighth aspect of the present invention employs a configuration wherein the optical device includes: a multi-core fiber; and a single-core connector provided to one end of the multi-core fiber, the multi-core fiber being a multi-core fiber in accordance with any one of the first to seventh aspects.

An optical device in accordance with a ninth aspect of the present invention employs a configuration wherein the optical device includes: a multi-core fiber bundle which is a bundle of a plurality of multi-core fibers; and a multi-core connector or an integrated single-core connector group, the multi-core connector or the single-core connector group being provided to one end of the multi-core fiber bundle, each of the plurality of multi-core fibers being a multi-core fiber in accordance with any one of the first to seventh aspects, the plurality of multi-core fibers being fixed to the multi-core connector or the single-core connector group such that connector-side end surfaces of the plurality of multi-core fibers are all inclined in a specific inclination direction, each of the connector-side end surfaces being one of the first end surface and the second end surface, the one of the first end surface and the second end surface being provided with the multi-core connector or the single-core connector group.

An optical device in accordance with a tenth aspect of the present invention employs, in addition to the configuration in accordance with the ninth aspect, a configuration wherein: each of the plurality of multi-core fibers is configured such that core numbers of the plurality of cores are identifiable in the connector-side end surface; and the plurality of multi-core fibers include multi-core fibers in which cores having a same core number at least partially overlap each other as a result of subjecting the connector-side end surfaces of the multi-core fibers to translation and inversion.

An optical device in accordance with an eleventh aspect of the present invention employs, in addition to the configuration in accordance with the tenth aspect, a configuration wherein: the inversion is inversion carried out with respect to a virtual axis which is in parallel with the inclination direction or inversion with respect to a virtual axis which is orthogonal to the inclination direction.

An optical device in accordance with an twelfth aspect of the present invention employs, in addition to the configuration in accordance with the ninth aspect, a configuration wherein: each of the plurality of multi-core fibers is configured such that core numbers of the plurality of cores are identifiable in the connector-side end surface; and the plurality of multi-core fibers include multi-core fibers in which cores having a same core number at least partially overlap each other as a result of subjecting the connector-side end surfaces of the multi-core fibers to translation and rotation.

An optical device in accordance with a thirteenth aspect of the present invention employs, in addition to the configuration in accordance with any one of the tenth to twelfth aspects, a configuration wherein: each of the plurality of multi-core fibers includes a marker formed inside the cladding; the plurality of multi-core fibers are constituted by a first multi-core fiber group and a second multi-core fiber group, the first multi-core fiber group including multi-core fibers whose connector-side end surfaces are aligned along a virtual axis orthogonal to the specific direction and are arranged on one side of the virtual axis, the second multi-core fiber group including multi-core fibers whose connector-side end surfaces are aligned along the virtual axis and are arranged on the other side of the virtual axis; and in each of the connector-side end surfaces of the plurality of multi-core fibers, a distance from the marker to the virtual axis is shorter than distances from the plurality of cores to the virtual axis.

An optical device in accordance with a fourteenth aspect of the present invention employs a configuration wherein the optical device further includes: a Fan-In/Fan-Out device including an optical path conversion section and a multi-core fiber, the multi-core fiber being a multi-core fiber in accordance with in any one of the eighth to thirteenth aspects or the multi-core fiber being connected to a multi-core fiber in accordance with in any one of the eighth to thirteenth aspects.

A multi-core fiber in accordance with a fifteenth aspect of the present invention employs a configuration of a multi-core fiber assembly including at least one first multi-core fiber and at least one second multi-core fiber, the at least one first multi-core fiber including a cladding, a plurality of cores formed inside the cladding, and a first end surface inclined so as not to be orthogonal to an extending direction of the plurality of cores, the at least one second multi-core fiber including a cladding, a plurality of cores formed inside the cladding, and a second end surface inclined so as not to be orthogonal to an extending direction of the plurality of cores, inclination directions of the first end surface and the second end surface being set so that, in a case where the first end surface and the second end surface are brought into surface contact with each other so as to minimize an angle made by the extending direction of the plurality of cores in the first end surface and the extending direction of the plurality of cores in the second end surface, each of the plurality of cores in the first end surface at least partially overlaps any of the plurality of cores in the second end surface.

### [Supplementary Note]

The present invention is not limited to the embodiments, but can be altered by a skilled person in the art within the scope of the claims. The present invention also encompasses, in its technical scope, any embodiment derived by combining technical means disclosed in differing embodiments. For example, the multi-core fiber may be twisted. A multi-core fiber satisfying the condition(s) recited in the claims is encompassed in the technical scope of the present invention, independently of whether or not the multi-core fiber is twisted. Further, the connector may have any shape. For example, the technical scope of the present invention also encompasses (i) an optical device including a connector of a type that has a fiber hole to which a multi-core fiber can be inserted and fixed or (ii) an optical device including a connector of a type that as a V-groove in which a multi-core fiber can be housed and fixed. Further, the end surface of the multi-core fiber may be (i) a flat surface, (ii) a curved surface (e.g., a concaved spherical surface or a recessed spherical surface) which can be approximated by a flat surface, or (iii) a curved surface which can be approximated on the basis of data of a virtual end surface obtained by subtracting, from data of an end surface of a case where surface roughness is present, data of a virtual end surface of a case where the end surface is fitted.

Further, instead of the definition made above, the above-described virtual axis can be defined as below, for example. That is, in the end surface of the multi-core fiber or the end surface of the multi-core fiber included in the optical device, a virtual axis extending in a direction orthogonal to a direction of, among an X-axis direction component and a Y-axis direction component into which vector components of the above-described inclination direction are divided, the one having a larger scalar quantity can be defined as the virtual axis.

In a case where the optical device has a defining structure that can define a specific direction and a direction perpendicular to the specific direction, a virtual axis that can be determined on the basis of the defining structure can be defined as the virtual axis. Examples of the above-described defining structure encompass two guide holes, two guide pins, one guide hole, and one guide pin each provided to an end surface of the optical device. In this case, (i) a virtual axis passing through centers of the two guide holes, centers of the two guide pins, or a virtual axis passing through a center of the one guide hole and a center of the guide pin or (ii) a virtual axis orthogonal to the virtual axis can be defined as the virtual axis. Further, examples of the above-described defining structure include two multi-core fibers exposed from the end surface of the optical device. In this case, a virtual axis passing through centers of the two multi-core fibers or a virtual axis orthogonal to the virtual axis can be expressed as the virtual axis. Further, examples of the above-described defining structure include a ferrule, a flange, an array, a housing, and the like each of which has profile of a polygonal shape, a recessed shape, a projected shape, or an anisotropic shape (e.g., a barrel shape or a shape with a cutout) provided to an optical device. In this case, (i) a virtual axis extending in a specific direction which can be determined on the basis of the above profile or (ii) a virtual axis orthogonal to the virtual axis can be defined as the virtual axis.

### Reference Signs List

MF: multi-core fiber
a1 to an: core
b: cladding
c: marker
σ1: first end surface
σ2: second end surface
v1, v2: inclination direction
θ1, θ2: inclination angle
OD1, OD2: optical device
C1, C2: single-core connector
C3, C4: multi-core connector
MFB: multi-core fiber bundle
MFS: multi-core fiber assembly

## Claims

1. A multi-core fiber comprising:
a cladding;
a plurality of cores formed inside the cladding; and
a first end surface and a second end surface each of which is inclined so as not to be orthogonal to an extending direction of the plurality of cores,
inclination directions of the first end surface and the second end surface being set so that, in a case where the first end surface and the second end surface are brought into surface contact with each other so as to minimize an angle made by an extending direction of the plurality of cores in the first end surface and an extending direction of the plurality of cores in the second end surface, each of the plurality of cores in the first end surface at least partially overlaps any of the plurality of cores in the second end surface.

2. The multi-core fiber according to claim 1, wherein:
an inclination angle of the first end surface and an inclination angle of the second end surface are equivalent to each other.

3. The multi-core fiber according to claim 1 or 2, wherein:
in the first end surface and the second end surface, core numbers of the plurality of cores are identifiable; and
in a case where the first end surface and the second end surface are brought into surface contact with each other so as to minimize the angle, cores which at least partially overlap each other have a same core number.

4. The multi-core fiber according to claim 1 or 2, wherein:
in the first end surface and the second end surface, core numbers of the plurality of cores are identifiable; and
in a case where the first end surface and the second end surface are brought into surface contact with each other so as to minimize the angle, cores which at least partially overlap each other have different core numbers.

5. The multi-core fiber according to any one of claims 1 to 4, wherein:
in each of the first end surface and the second end surface, the plurality of cores are arranged in a linearly symmetric manner with respect to a virtual axis which is orthogonal to the inclination direction.

6. The multi-core fiber according to claim 5, wherein:
in the first end surface and the second end surface, the virtual axis does not cross any of the plurality of cores.

7. The multi-core fiber according to claim 5 or 6, further comprising:
a marker formed in the cladding, wherein
in each of the first end surface and the second end surface, a center of the marker is disposed between (i) the virtual axis and (ii) a straight line which passes through a center of, among the plurality of cores, a core farthest from the virtual axis and which is in parallel with the virtual axis.

8. An optical device comprising:
a multi-core fiber; and
a single-core connector provided to one end of the multi-core fiber,
the multi-core fiber being a multi-core fiber recited in any one of claims 1 to 7.

9. An optical device comprising:
a multi-core fiber bundle which is a bundle of a plurality of multi-core fibers; and
a multi-core connector or a single-core connector group which is integrated, the multi-core connector or the single-core connector group being provided to one end of the multi-core fiber bundle,
each of the plurality of multi-core fibers being a multi-core fiber recited in any one of claims 1 to 7, the plurality of multi-core fibers being fixed to the multi-core connector or the single-core connector group such that connector-side end surfaces of the plurality of multi-core fibers are all inclined in a specific inclination direction, each of the connector-side end surfaces being one of the first end surface and the second end surface, the one of the first end surface and the second end surface being provided with the multi-core connector or the single-core connector group.

10. The optical device according to claim 9, wherein:
each of the plurality of multi-core fibers is configured such that core numbers of the plurality of cores are identifiable in the connector-side end surface; and
the plurality of multi-core fibers include multi-core fibers in which cores having a same core number at least partially overlap each other as a result of subjecting the connector-side end surfaces of the multi-core fibers to translation and inversion.

11. The optical device according to claim 10, wherein:
the inversion is inversion carried out with respect to a virtual axis which is in parallel with the inclination direction or inversion with respect to a virtual axis which is orthogonal to the inclination direction.

12. The optical device according to claim 9, wherein:
each of the plurality of multi-core fibers is configured such that core numbers of the plurality of cores are identifiable in the connector-side end surface; and
the plurality of multi-core fibers include multi-core fibers in which cores having a same core number at least partially overlap each other as a result of subjecting the connector-side end surfaces of the multi-core fibers to translation and rotation.

13. The optical device according to any one of claims 10 to 12, wherein:
each of the plurality of multi-core fibers includes a marker formed inside the cladding;
the plurality of multi-core fibers are constituted by a first multi-core fiber group and a second multi-core fiber group, the first multi-core fiber group including multi-core fibers whose connector-side end surfaces are aligned along a virtual axis orthogonal to the specific direction and are arranged on one side of the virtual axis, the second multi-core fiber group including multi-core fibers whose connector-side end surfaces are aligned along the virtual axis and are arranged on the other side of the virtual axis; and
in each of the connector-side end surfaces of the plurality of multi-core fibers, a distance from the marker to the virtual axis is shorter than distances from the plurality of cores to the virtual axis.

14. An optical device further comprising:
a Fan-In/Fan-Out device including an optical path conversion section and a multi-core fiber,
the multi-core fiber being a multi-core fiber recited in any one of claims 8 to 13 or the multi-core fiber being connected to a multi-core fiber recited in any one of claims 8 to 13.

15. A multi-core fiber assembly comprising:
at least one first multi-core fiber and at least one second multi-core fiber,
the at least one first multi-core fiber including
a cladding,
a plurality of cores formed inside the cladding, and
a first end surface inclined so as not to be orthogonal to an extending direction of the plurality of cores,
the at least one second multi-core fiber including
a cladding,
a plurality of cores formed inside the cladding, and
a second end surface inclined so as not to be orthogonal to an extending direction of the plurality of cores,
inclination directions of the first end surface and the second end surface being set so that, in a case where the first end surface and the second end surface are brought into surface contact with each other so as to minimize an angle made by the extending direction of the plurality of cores in the first end surface and the extending direction of the plurality of cores in the second end surface, each of the plurality of cores in the first end surface at least partially overlaps any of the plurality of cores in the second end surface.
